# EUROPEAN PATENT APPLICATION

(11) **EP 2 264 664 A1**
(43) Date of publication of application: **22.12.2010**
(21) Application number: 10006173.8
(22) Date of filing: 15.06.2010
(51) Int. Cl.: G06Q 30/00

(54) **Marketing asset exchange**

(30) Priority: 19.06.2009 US 218734 P; 01.12.2009 US 628664
(71) Applicant: ACCENTURE Global Services GmbH, 8200 Schaffhausen (CH)
(72) Inventor: Beal, Alexander M., Portland, ME 04102 (US); Hare, Anita K., Glenview, IL 60025 (US)
(74) Representative: Müller-Boré & Partner Patentanwälte

(57) **Abstract**

A system for marketing asset searching includes a computer system having a processor and memory, a network configured to interface with external databases accessible through external searching tools, where the external databases contain assets, and a user interface configured to facilitate asset searching among the external databases. The user interface further includes a keyword inquiry module configured to receive a search criteria from a user, a filter module configured to provide a filtering options to the user, a search request module configured to provide a search request constructed from the search criteria to the external searching tools to initiate searching of the external databases, and a display output module configured to receive the results of the search request and present the results on a display.

## Description

### BACKGROUND OF THE INVENTION

### 1. Cross-Reference To Related Applications.

This application claims the benefit of priority from Provisional Patent Application Serial No. 61/218,734, filed on June 19, 2009, entitled System and Method for Market Asset Exchange. Application Serial No. 61/218,734 is hereby incorporated by reference in its entirety.

### 2. Technical Field.

This disclosure relates to document and media (asset) searching. In particular, this disclosure relates to an interface that permits efficient and selective identification of marketing-related documents and media.

### 3. Background.

Personnel in corporate sales and marketing groups often search for various forms of content, such as documents, audio files, podcasts, video files, flash files, images, print and electronic documents, Websites and Web pages, and other media (referred to herein as "assets") in response to requests and requirements when making or supporting sales presentations, business promotions, and other marketing-related activities. Often, the request for such assets requires an extremely rapid response, such as when a presentation or meeting is scheduled without sufficient notice.

However, it is difficult and time-consuming to find relevant marketing material and assets. If the relevant asset cannot be found or cannot be found quickly enough, such assets are often created from "scratch." Even if sufficient time exists to search in-house databases, finding and identifying relevant assets or material is time-consuming.

Existing searching tools and searching engines often use key word searches coupled with certain algorithms to isolate documents thought to be relevant to the user. However, hundreds or thousands of assets may be identified. Reviewing such large numbers of assets is time consuming and inefficient. Time-consuming and inefficient activities directly translate into higher cost and lower productivity.

Because of the inefficiency in obtaining desired assets using known search tools and techniques, there is a need for a searching tool that can assist marketing communications personnel in quickly and efficiently locating desired assets.

### SUMMARY

The system and method for Marketing Asset Exchange is a tool and interface for use by a marketing department or a marketing and communications department of an organization, to aid in finding marketing assets and market-ready assets for use in sales and marketing campaigns. Such assets include documents, audio files, podcasts, video files, flash files, images, print and electronic documents, Websites and Web pages, and other media, which are found and identified regardless of where the source documents or media (the asset) resides within a business network.

The system for Marketing Asset Exchange requests and receives data from a plurality of "in-house" or proprietary searching tools or engines, and integrates the results using a single user interface. The user can then leverage the data, independent of the sources. The results obtained via the Marketing Asset Exchange permit collaboration, sharing, and leveraging of the assets across various marketing groups and platforms, and may use Web 2.0 technologies to create a combined searching application with a highly intuitive and user-friendly interface.

In one embodiment, the system for Marketing Asset Exchange includes a computer system having a processor and memory, a network operatively coupled to external databases accessible through external searching tools, where the external databases contains assets, where the assets are categorized as marketing assets and as market-ready assets. The market-ready assets are qualified for publication outside a business organization that controls or develops the assets, and the marketing assets are not qualified for publication outside a business organization that controls or develops the assets. A user interface is configured to facilitate asset searching among the external databases.

The user interface includes a keyword inquiry module configured to receive search criteria from a user, a filter module configured to provide a filtering option to the user, a search request module configured to provide a search request constructed from the search criteria, to the external searching tools, to initiate searching of the external databases, and a display output module configured to receive the results of the search request and present the results on a display, where the searching of the external databases is limited by the filter option selected by the user.

In another embodiment, the plurality of the assets is categorized as marketing assets and as market-ready assets. A market-ready asset is an asset qualified for publication outside a business organization that controls, develops, or manages the asset. A marketing asset is an asset the is not qualified or not necessarily qualified for publication outside a business organization that controls, develops, or manages the asset.

In a specific embodiment, the search request module provides the search criteria to a front-end of an external search tool, and the external search tool returns the results corresponding to the search of the plurality of databases. The display output module provides the results of the search on a first area of the display and indicates a count of the located assets found among the external databases, including a link to each of the located assets, and displays an indication of whether the located asset is a marketing asset or a market-ready asset. The display output module identifies an asset as a market-ready asset based on an identification of a predetermined database from among the external databases.

Other embodiments of systems, methods, features, and their corresponding advantages will be, or will become, apparent to one with skill in the art upon examination of the following figures and detailed description. It is intended that all such additional systems, methods, features, and advantages be included within this description, be within the scope of the invention, and be protected by the following claims.

### BRIEF DESCRIPTION OF THE DRAWINGS

The system may be better understood with reference to the following drawings and the description. The components in the figures are not necessarily to scale, emphasis instead being placed upon illustrating the principles of the invention. Moreover, in the figures, like-referenced numerals designate corresponding parts throughout the different views.

Figure 1 shows a computing platform and operating environment for a system for Marketing Asset Exchange;

Figure 2 is a pictorial diagram of a display screen image showing an initial user screen;

Figure 3 is a pictorial diagram of a display screen image showing inputting of a search string;

Figure 4 is a pictorial diagram of a display screen image showing search results;

Figure 5 is a pictorial diagram of a display screen image showing a detailed asset card;

Figure 6 is a pictorial diagram of a display screen image showing addition of tags;

Figure 7 is a pictorial diagram of a display screen image showing review of an asset;

Figure 8 is a pictorial diagram of a display screen image showing deletion of an asset;

Figure 9 is a pictorial diagram of a display screen image showing archiving of an asset;

Figure 10 is a pictorial diagram of a display screen image showing a print view format;

Figure 11 is a pictorial diagram of a display screen image showing thumbnail views of assets;

Figure 12 is a pictorial diagram of a display screen image showing an advanced search;

Figures 13-18 are pictorial diagrams of display screen images showing the addition of an asset;

Figures 19-23 are pictorial diagrams of display screen images showing favorites;

Figure 24 is a pictorial diagram of a display screen image showing alerts;

Figure 25 is a pictorial diagram of a display screen image showing a rollover to icon operation;

Figure 26 is a pictorial diagram of a display screen image showing a character count;

Figure 27 is a pictorial diagram of a display screen image showing a detail viewing operation;

Figure 28 is a pictorial diagram of a display screen image showing language selection;

Figure 29 is a pictorial diagram of a display screen image showing popular tags;

Figure 30 is a pictorial diagram of a display screen image showing country selection;

Figure 31 is a pictorial diagram of a display screen image showing a notification operation;

Figure 32 is a pictorial diagram of a display screen image showing size limitations;

Figure 33 is a pictorial diagram of a display screen image showing a date range; and

Figures 34-45 are flowcharts showing the steps that may be taken by the system for Marketing Asset Exchange.

### DETAILED DESCRIPTION OF THE PREFERRED EMBODIMENTS

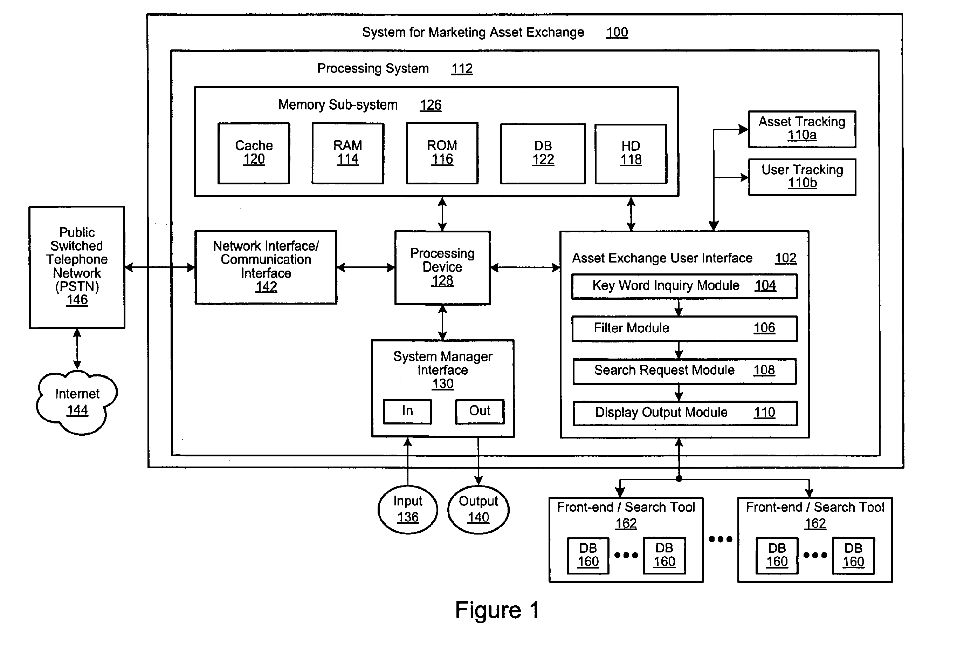

The specific embodiment of Figure 1 is a high-level hardware block diagram of a computer platform on which a system for Marketing Asset Exchange 100 may be implemented. The system 100 may be embodied as a system cooperating with computer hardware components and/or as a computer-implemented method.

The system 100 includes an asset exchange user interface 102, which in turn, includes a keyword inquiry module 104, a filter module 106, a search request module 108, a display output module 110, an asset tracking module 110a, and a user tracking module 110b. The modules 104, 106, 108, 110, 110a, and 110b, and all other modules referred to in this document, may be implemented in hardware, software, firmware, or any combination of hardware, software, and firmware, and may or may not reside within a single physical or logical space.

For example, the modules 104, 106, 108, 110, 110a, and 110b, and other modules referred to in this document and which may or may not be shown in the drawings, may be remotely located from each other and may be coupled by a communication network. Further, the above-mentioned modules and other modules need not necessarily reside physically or logically within the asset exchange user interface 102, and may be separate therefrom.

The system 100 includes a computer or processing system 112, which includes various hardware components, such as RAM 114, ROM 116, hard disk storage 118, cache memory 120, database storage 122, and the like (also referred to as "memory subsystem" 126). The computer system 112 may include any suitable processing device 128, such as a computer, microprocessor, RISC processor (reduced instruction set computer), CISC processor (complex instruction set computer), mainframe computer, work station, single-chip computer, distributed processor, server, controller, micro-controller, discrete logic computer, and the like, as is known in the art. For example, the processing device 128 may be an Intel Pentium® microprocessor, x86 compatible microprocessor, or equivalent device, and may be incorporated into a server, a personal computer or any suitable computing platform. Preferably, the system for Marketing Asset Exchange is executed on a Microsoft SharePoint site platform.

The memory subsystem 126 may include any suitable storage components, such as RAM, EPROM (electrically programmable ROM), flash memory, dynamic memory, static memory, FIFO (first-in, first-out) memory, LIFO (last-in, first-out) memory, circular memory, semiconductor memory, bubble memory, buffer memory, disk memory, optical memory, cache memory, and the like. Any suitable form of memory may be used whether fixed storage on a magnetic medium, storage in a semiconductor device, or remote storage accessible through a communication link.

A system manager interface 130 may be coupled to the computer system 112 and may include various input devices 136, such as switches selectable by the system manager and/or a keyboard. The system manager interface 130 may be coupled with or may be part of the asset exchange user interface 102, and various logical or functional capabilities may reside either in the system manager interface 130 or in the asset exchange user interface 102. The system manager interface 130 also may include suitable output devices 140, such as an LCD display, a CRT, various LED indicators, printer, and/or a speech output device, as is known in the art.

To facilitate communication between the processing system 112 and external sources, a communication interface 142 may be operatively coupled to the computer system. The communication interface 142 may be, for example, a local area network, such as an Ethernet network, intranet, Internet, or other suitable network 144. The communication interface 142 may also be connected to a public switched telephone network (PSTN) 146 or POTS (plain old telephone system), which may facilitate communication via the Internet 144. Dedicated and remote networks may also be employed, and the system may further communicate with external exchanges and sources of information 146. Any suitable commercially-available communication device or network may be used.

The asset exchange interface 102 may be operatively coupled to a plurality of "global" databases or external databases 160 that communicate with the processing device 128. The asset exchange interface 102 is configured to facilitate asset searching among the plurality of external databases 160 rather than performing the actual search itself. In that regard, one or more of the external databases 160 may be associated with an existing "front-end" of a search engine or other searching tools 162. For example, the search engines or search tools 162 may access a plurality of proprietary (or non-proprietary but private) databases or knowledge-bases, such as a Company Enterprise Database, which is a general-type of database, a Client Credential Database (a repository for client credentials), Brand Database (a repository for purchased media or images), Contact Expert Database (a repository for information on specific experts in particular areas). However, any specific database may be established to provide such specific information. Other marketing assets may be found by linking to a corporate intranet or to a secured portion of a corporate internet that controls the databases.

Although the external databases 160 may be externally or remotely located from the system 100, such databases are preferably proprietary to the business organization employing the system 100. Thus, the system 100 is preferably an "in-house" system for use in a specific business department within the business organization.

Preferably, the asset exchange interface 102 receives the search criteria provided by the user, and transmits the search criteria to the external database 160 or corresponding search tool 162. The corresponding search tool 162 then performs the actual search and returns information regarding the results of the search, including the link or URL (uniform resource locator) to the results, back to asset exchange interface 102 for processing and display. Thus, the system for Marketing Asset Exchange 100 does not necessarily replace any existing search engine or content tool, but rather leverages and integrates a business organization's existing search engines and content tools into a single user interface. Accordingly, the system 100 is a combination and integration of many searching tools. In one specific embodiment, the asset exchange interface 102 may perform the actual searching function.

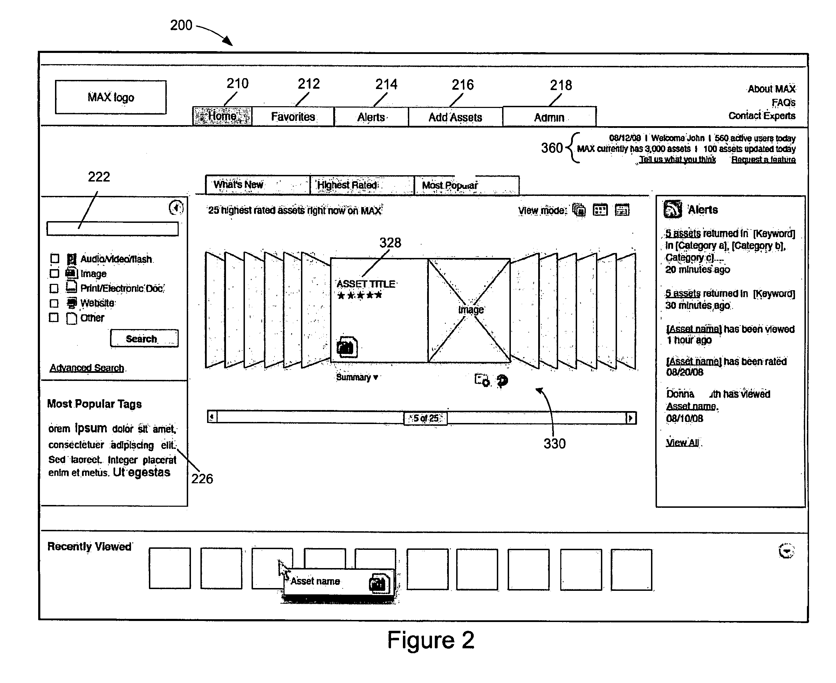

Figures 2-24 show pictorial images corresponding to screen displays of the system 100 when accessed by a user to perform a search or perform database updates. Various dialog boxes shown in the screen displays are further explained in the drawing in the text in the right-side panel of each figure.

Figure 2 depicts an opening screen 200 presented to the user. The opening screen 200 may include five main tabs, including a home tab 210, a favorites tab 212, an alerts tab 214, an add assets tab 216, and an administration tab 218. The function of these tabs will be discussed below.

The screen 200 includes a keyword inquiry dialog box 222 where the user may enter a search string. The keyword inquiry module 104 may handle input and parsing of the input string and transmission of the string to the search request module 108.

Searching may also be performed using a most popular tags dialog box 226, which includes predetermined tags (keywords) that have been previously associated with the asset. Such tags have been previously entered by a human reader (often the owner, creator, or manager of the asset) using his or her judgment regarding the purported relevancy of the tags and keywords. Adding the tags and keywords will be discussed later with respect to "adding tags." Thus, the user can direct the system 100 to search on the basis of the relevant tags. For example, if an asset corresponds to a "delivery center" in the Philippines, one may include the tag "Manila" in the most popular tag area so that a user will be able to locate that asset easily without being required to use the keyword "Philippines." The search request module 108 may provide or facilitate the searching process described above.

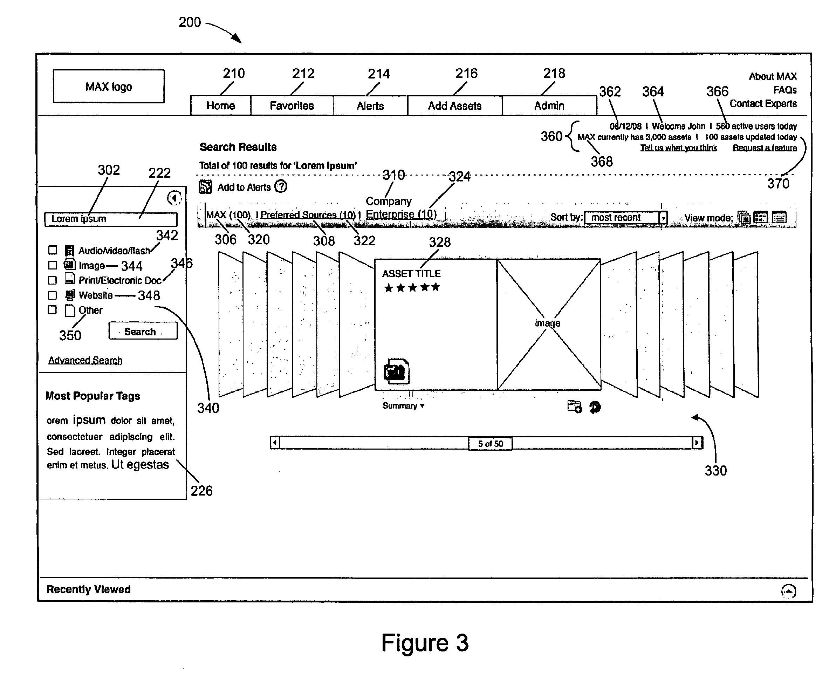

Figure 3 depicts the opening screen of Figure 1, where the search string "Lorem ipsum" 302 has been entered by the user. Once the user has initiated the search based on the entered search string 302, the system 100 facilitates asset searching among the plurality of external databases, such as the proprietary databases or knowledge-bases mentioned above, including but not limited to a Company Enterprise Database, a Client Credential Database, a Brand Database, and a Contact Expert Database.

As shown in Figure 3, the results of the search are grouped according to the type of database or knowledge-base in which the asset is found. The proprietary databases mentioned above may be grouped into three types of databases, namely the Marketing Asset Exchange database 306, preferred sources databases 308, and a company enterprise database 310. However, different categories of databases may be included.

The Marketing Asset Exchange database 306 contains assets that have been specially screened by qualified personnel and are deemed to be most useful or valuable for marketing purposes. Such assets are also qualified for general or public release or publication and pose no confidentially issues. These assets are referred to as market-ready assets. The screening of such assets for inclusion in the Marketing Asset Exchange database 306 will be discussed later with respect to "adding assets."

The preferred sources databases 308 contain assets that are deemed to adhere more closely to marketing guidelines regarding the type of content. In that regard, assets contained in the preferred sources databases 308 are deemed to be more accurate, and generally more useful for marketing purposes than assets contained in the company enterprise database 310. These assets are referred to as marketing assets, but are not as desirable as market-ready assets.

The company enterprise database 310 may be a general type of database, and assets located in this database may or may not be cleared for general publication and transmission outside of the business organization with respect to confidentiality and relevancy of the content. These assets are also referred to as marketing assets and represent a general category of assets that may or may not be useful to the marketing search user.

In the specific example of Figure 3, based on the search string "Lorem ipsum" 302, the system has located one hundred search results (320) found in the Marketing Asset Exchange database 306, ten search results (322) found in the preferred sources databases 308, and ten search results (324) found in the company enterprise database 310. Accordingly, because one hundred hits or search results are found in the Marketing Asset Exchange database 306, the user knows that each of those assets is a market-ready asset. The asset title 328 may be displayed in "carousel" style in a center panel 330. The display output module 110 may facilitate and organize displaying of the data to the user in either default formats or user-selected formats.

To help limit the results of the search, the user may click on one or more filtering options 340. Based on the filtering options selected, the assets returned by the search may be limited to either audio/video and flash files 342, images 344, print and electronic documents 346, Websites and Web pages 348, and other media 350. The filter module 106 may be configured to provide this filtering function.

As shown in Figure 3, various operating statistics and general information may be presented to the user in a general information section 360. Such information may include a date 362, username 364, number of active users 366, number of assets contained 368 in the Marketing Asset Exchange database 306, and number of assets updated on the date shown 370.

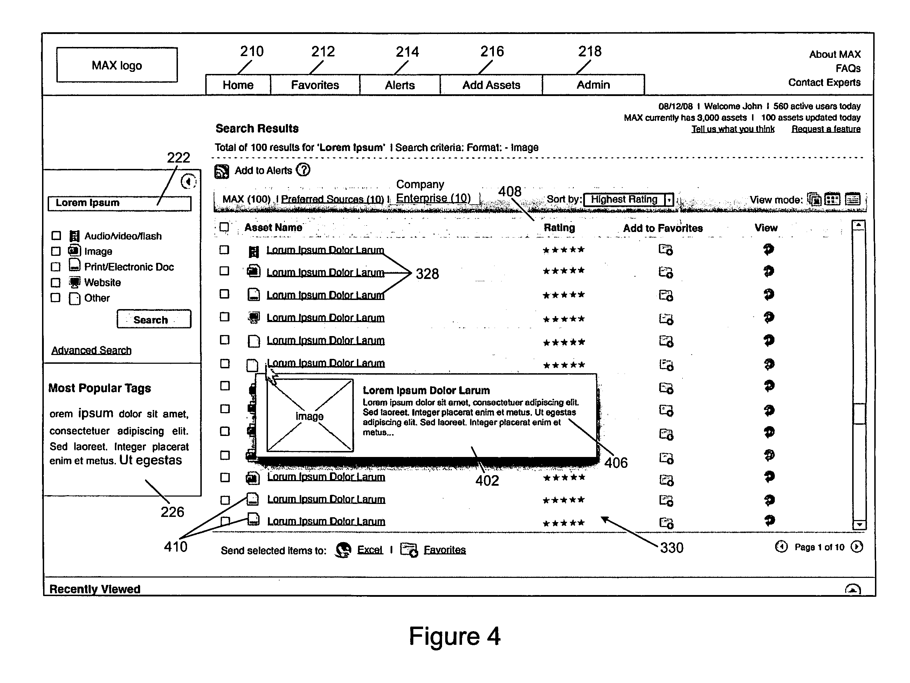

Figure 4 shows the same results as shown in Figure 3, but the title 328 of each asset found is shown as text in the center panel 330. Note that the user may move a cursor over any of the asset titles 328, and the display output module will display a "snapshot" 402 of a detailed asset card 406 associated with the asset. A database identifier icon 410 next to the title indicates in which of the three database types (306, 308, or 310) the asset was found.

An output associated with the search results also includes a ratings section 408. The ratings section 408 shows how this asset has been rated or reviewed by others viewing the asset according to the number of stars the asset received. The greater the number of stars, the more useful or popular the asset is deemed to be by those viewing the asset. The user or reviewer may also add comments to explain the review or qualify the review. The review represents the subjective opinion of the reviewer.

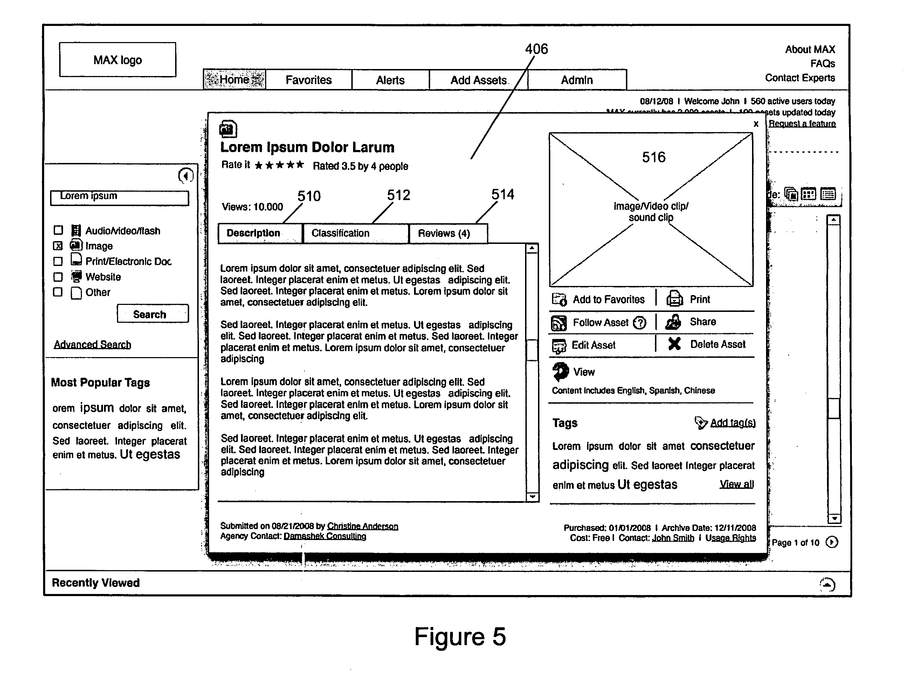

Figure 5 shows the detailed asset card 406 with additional granularity. The detailed asset card 406 provides a complete description of the asset 510, classification of the asset 512, and reviews of the asset 514. Also, if the asset is in the form of media, the media can be output or played by clicking on the image of the media 516.

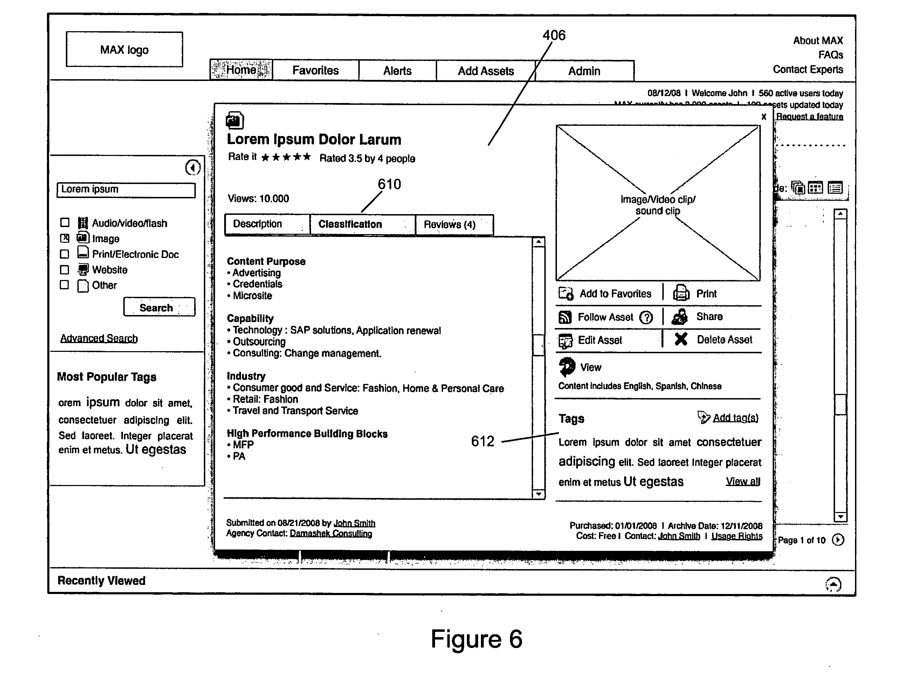

Figure 6 shows the detailed asset card 406 with further detail regarding classification of the asset 610 and the adding of corresponding tags 612.

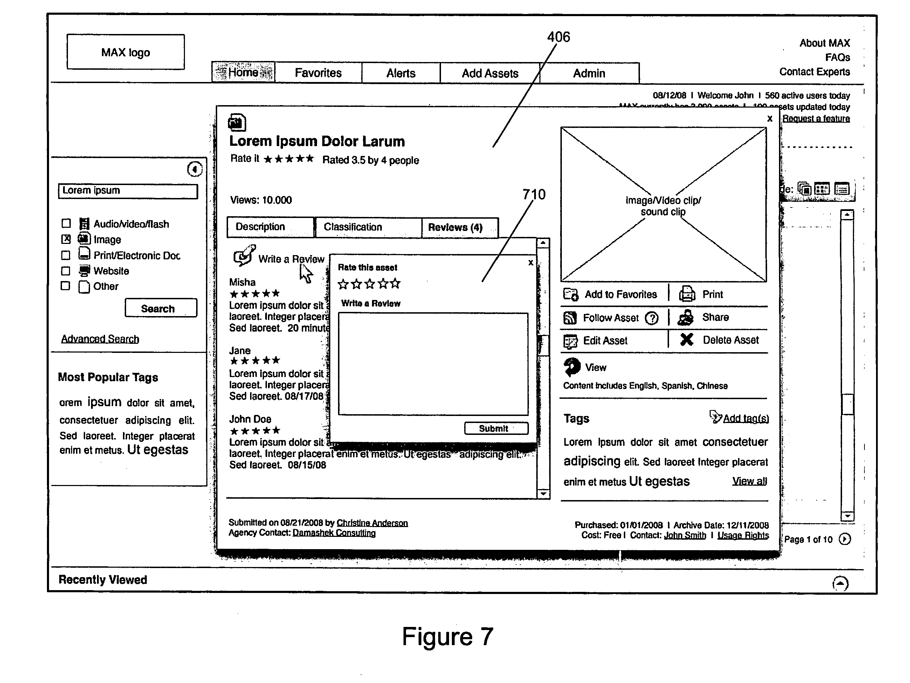

Figure 7 shows the detailed asset card 406 with further detail regarding the writing a review or rating of an asset 710.

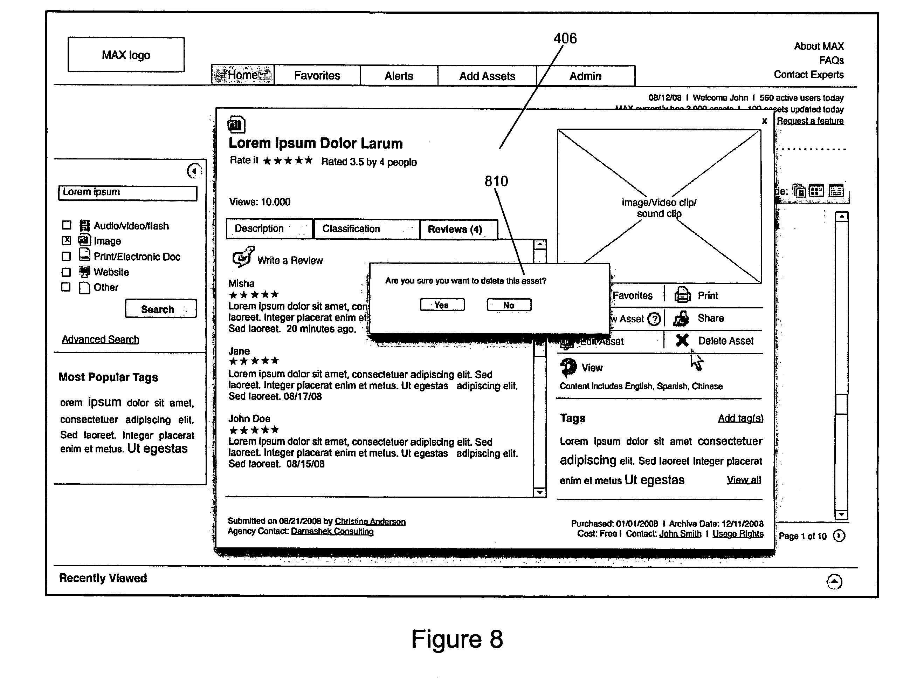

Figure 8 shows the detailed asset card 406 with further detail regarding the deletion of an asset 810.

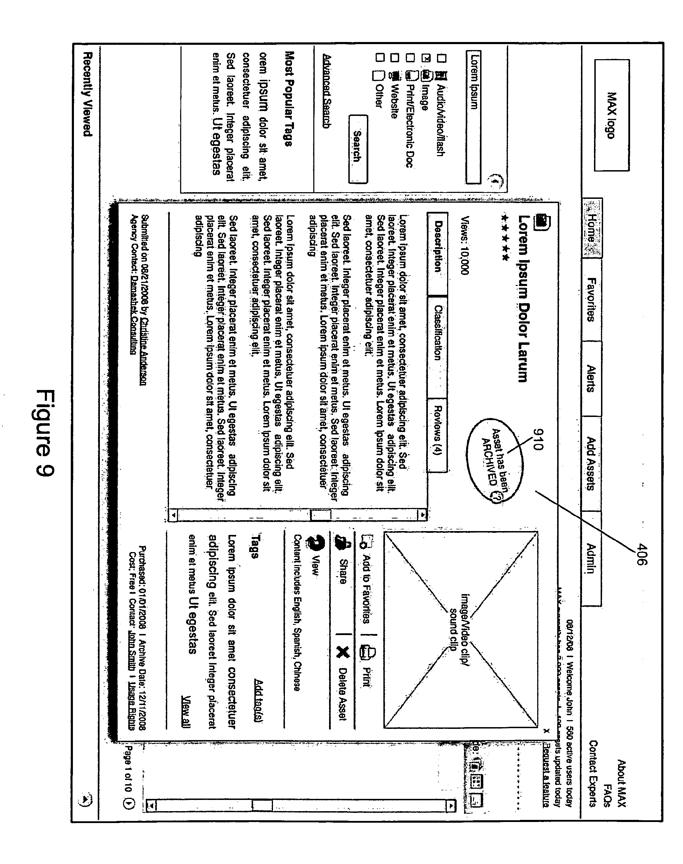

Figure 9 shows the detailed asset card 406 with further detail regarding archiving an asset 910.

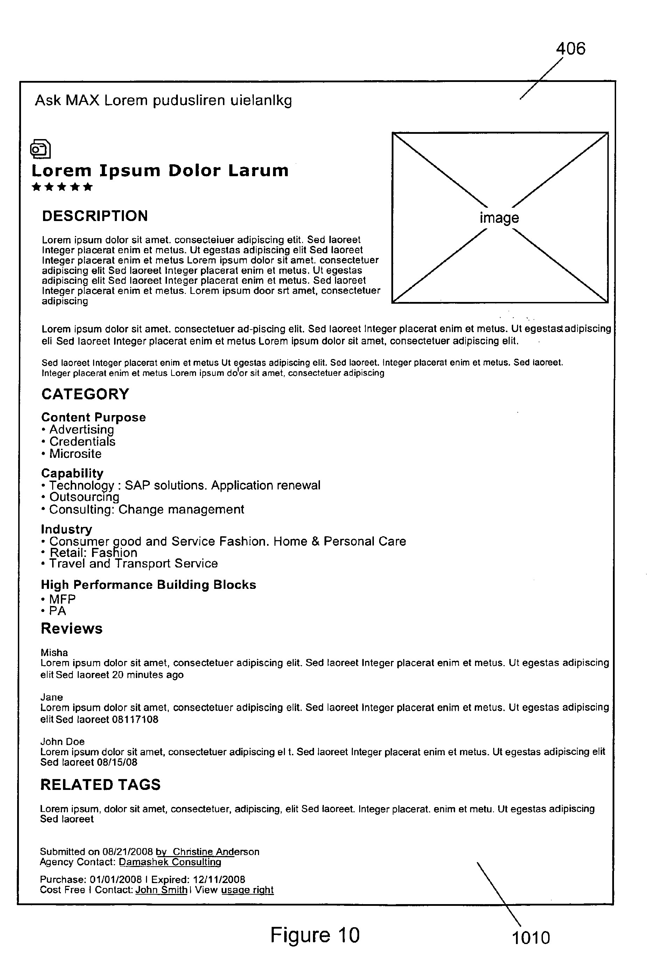

Figure 10 shows the detailed asset card 406 in a complete "print view" format 1010.

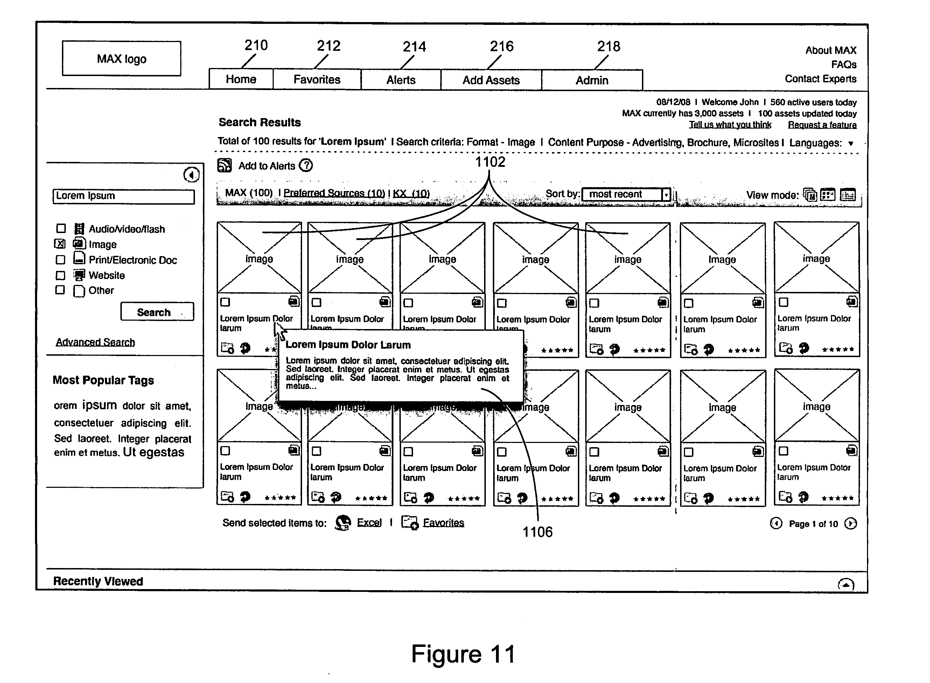

Figure 11 shows the same results as shown in Figures 3 and 4, but in this view, each asset found is shown as a "thumbnail" view 1102, which allows a visual view of each asset found. Again, additional information 1106 about a particular thumbnail view of an asset may be obtained when the user moves a cursor over the thumbnail image 1102.

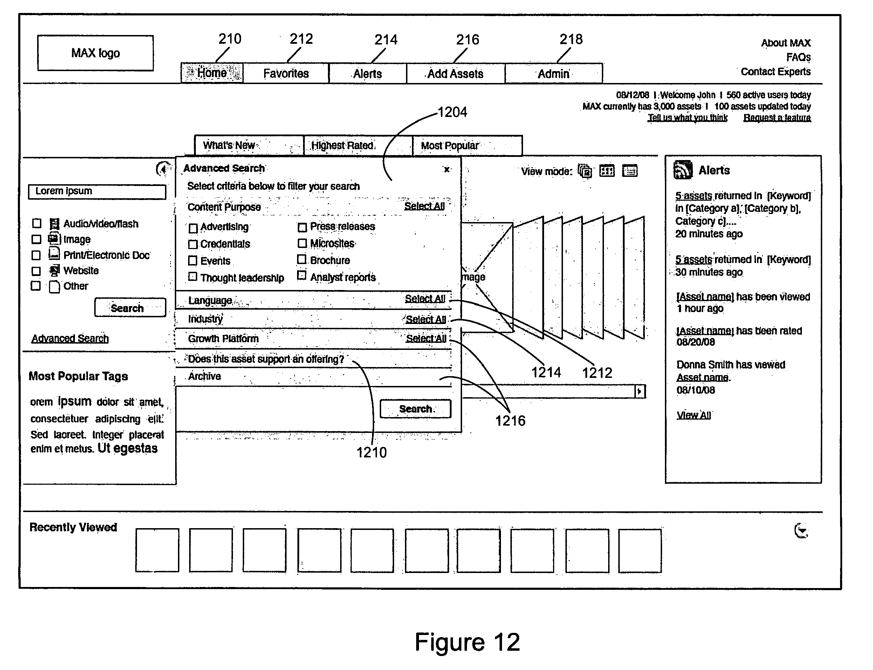

Figure 12 is a screen display that shows an advanced search option or dialog box 1204 to increase the granularity of the search. Some of the advanced searching options that the user may select include A) an indication if the asset to find is associated with a product or offering by the company 1210, B) selection of a language corresponding to the asset 1212, C) selection of a particular industry associated with the asset 1214, and D) a growth platform 1216 corresponding to the asset. Searching can be directed to archived assets by selecting the archive advanced search option 1216. Other advanced search options not shown in the figures may be provided. The filtering selection may be provided by the filtering module 106.

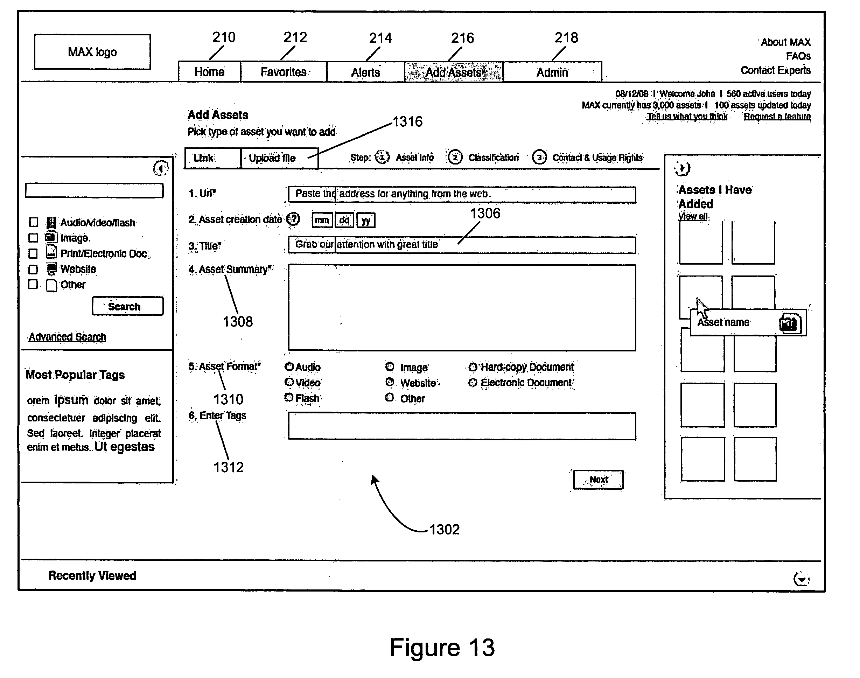

Figures 13-18 show screens associated with the add assets tab 216. The function of adding assets is to permit the user to select certain assets, such as a particularly relevant or particularly well-conceived piece of media, add searching identifiers, and add the asset to the Marketing Asset Exchange database 306, which contains the assets deemed to have the best or most relevant content, in the subjective opinion of the person viewing the asset. To "add" an asset, the user highlights the title or identifier of the asset, or otherwise selects the asset, and clicks on the add asset tab 216.

As shown in Figure 13, once the add asset tab 216 is clicked, a new dialog window is opened, which represents a detailed asset card 1302. The detailed asset card 1302 acts as a "card" or information sheet containing additional data about the asset. Any qualified person can add an asset to the Marketing Asset Exchange database 306 by filling out the detailed asset card 1302. Preferably, the creator, owner, or manager of the asset may add the asset, but in other situations, a user may add the asset. In one embodiment, personnel using the system 100 may be granted certain levels of access or authorization, which may determine who can add an asset to the Marketing Asset Exchange database 306. Additions made to the Marketing Asset Exchange database 306 may be monitored to determine if the addition of such an asset is warranted.

Various fields in the detailed asset card 1302 may be pre-populated for user convenience. For example, the title 1306 of the asset is pre-populated, but may be changed by the user. The user then fills in the appropriate fields, such as a summary of the asset 1308, indicates the format 1310 of the asset, and may enter tags (keywords) 1312 that the user believes will be helpful in locating this asset in a future search. When all of the fields have been populated, the user may click the upload icon 1316 to upload the asset to the Marketing Asset Exchange database 306.

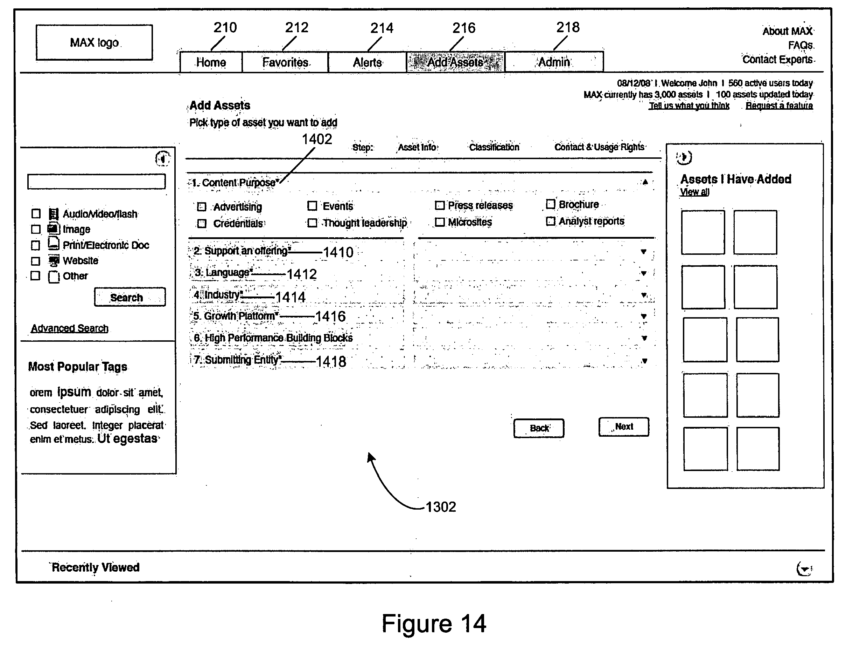

Figure 14 shows other fields that may be populated in the detailed asset card 1302, including content purpose 1402, an indication if the asset supports a product or offering by the company 1410, selection of a language corresponding to the asset 1412, an indication whether a particular industry is associated with the asset 1414, an indication whether a growth platform 1416 corresponds to the asset, and data relating to the submitting entity 1418. Note that the fields mentioned above (1410, 1412, 1414, and 1416) correspond to similar fields 1210, 1212, 1214, and 1216 in Figure 12, which are provided to the user as part of the result of the search.

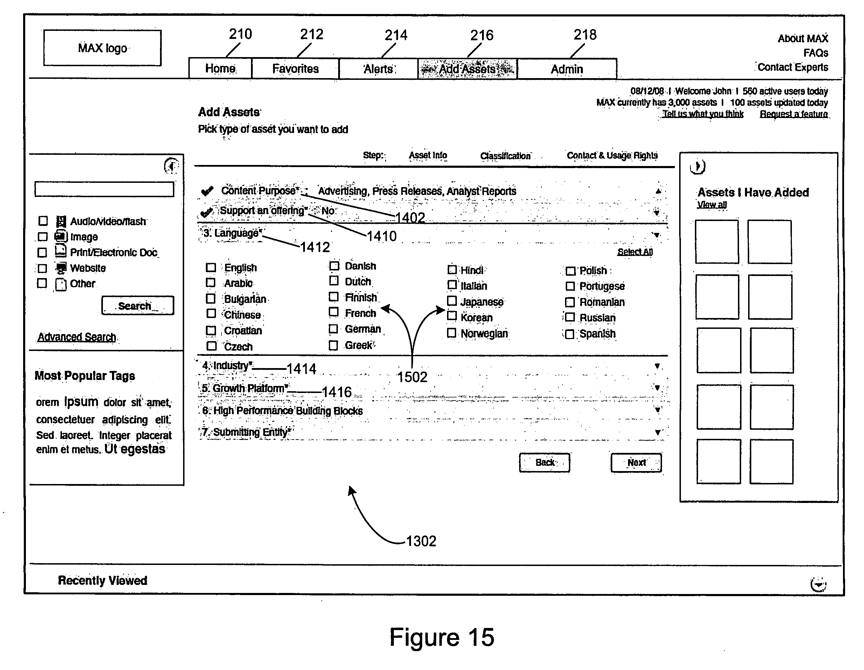

Figure 15 shows other fields that may be populated in the detailed asset card 1302, including the language corresponding to the asset 1412, which is shown in greater detail by displaying a plurality of languages 1502.

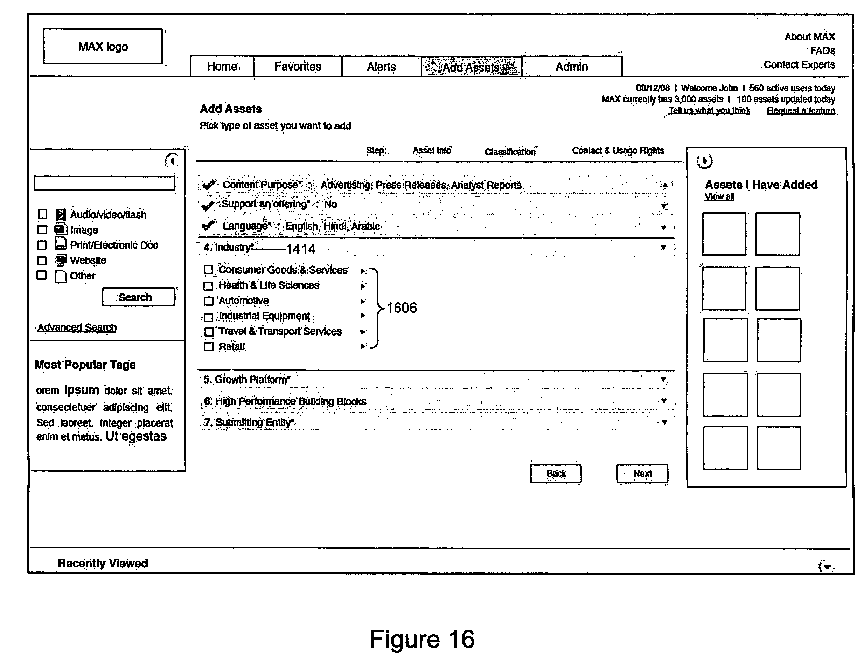

Figure 16 shows additional fields that may be populated in the detailed asset card 1302, including the indication of a particular industry associated with the asset 1414, which is shown in greater detail by displaying a plurality of industry areas 1606.

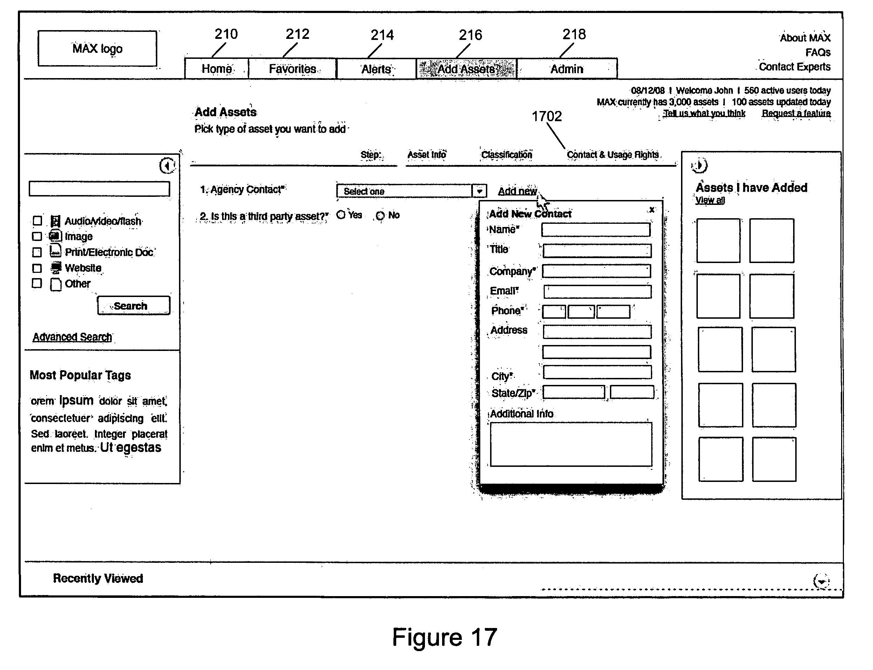

Figure 17 shows further fields that may be populated in the detailed asset card 1302, including data relating to contact and usage rights 1702 associated with the asset to add to the Marketing Asset Exchange database 306.

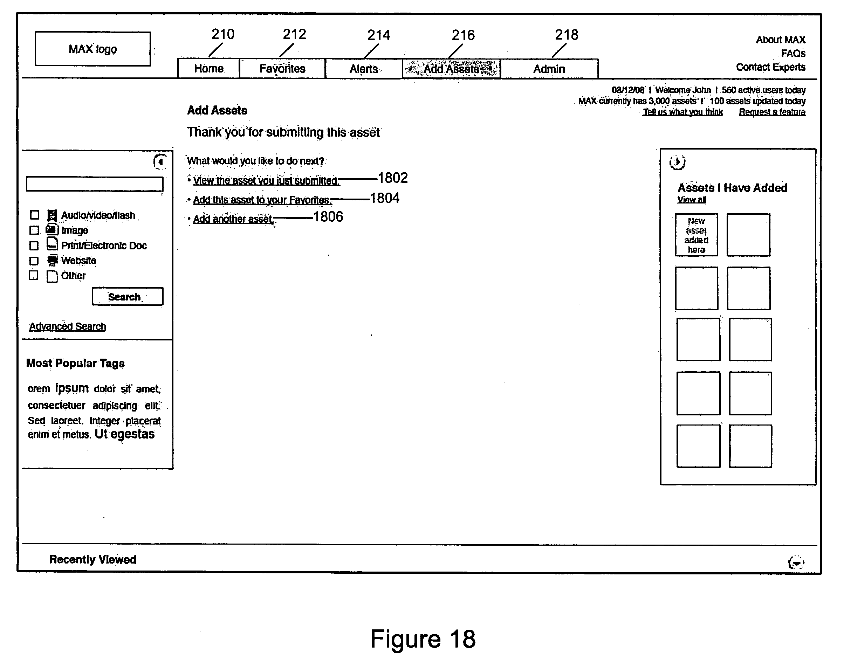

Figure 18 shows that after the user or asset owner/manager has submitted the detailed asset card to facilitate adding the asset to the Marketing Asset Exchange database 306, the user may view the asset submitted 1802, add the assets to a "favorites" folder 1804, or add another asset 1806.

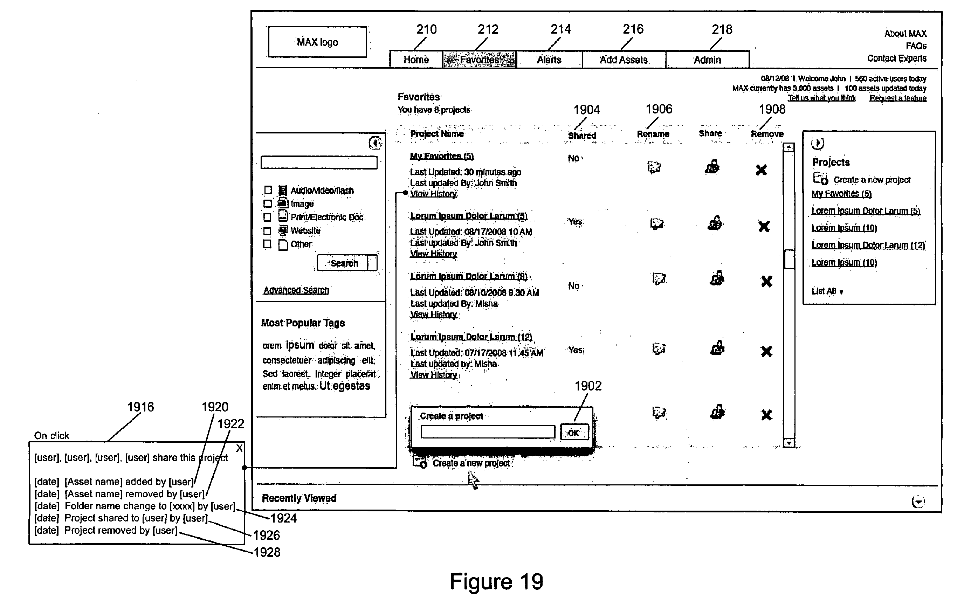

Figures 19-23 show screens associated with the favorites tab 212. The favorites tab 212 may be used by a user when a search has been performed and one or more assets have been returned and presented to the user. The user can then decide if the assets found are suitable and relevant. One or more of the assets may be entered into a favorites folder associated with that particular user.

Figure 19 illustrates that the user may create a project folder 1902 to contain specific "favorites." Icons or radio buttons are provided to indicate if a favorite is shared 1904, and permits the user to rename a favorite 1906 and remove a favorite 1908. Historical data 1916 associated with various favorites can also be viewed. The historical data 1916 may indicate when a favorite asset was added 1920, when an asset was removed 1922, when the folder name was changed 1924, when a project folder was shared 1926, and when a project folder was removed 1928.

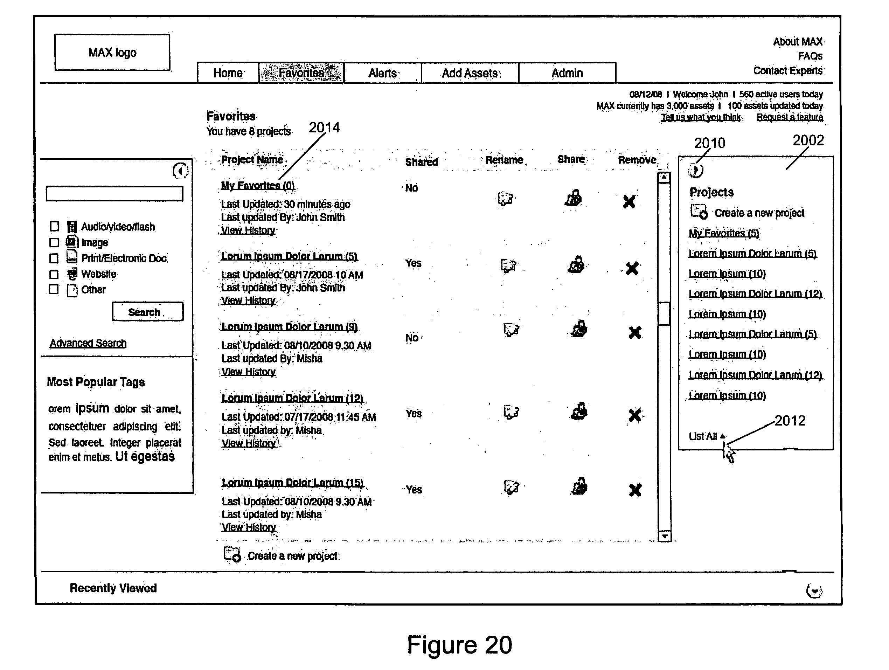

Figure 20 illustrates a plurality of projects 2002 associated with the user, and also illustrates that projects can be collapsed. Further, the user may display all projects 2012, and view contents of the project folder 2014.

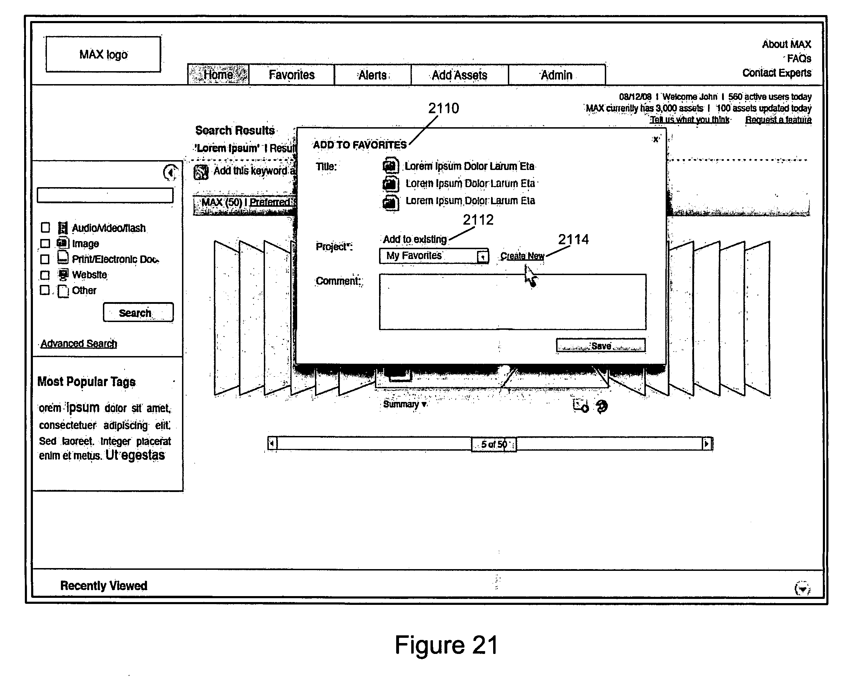

Figure 21 illustrates the addition of favorites 2110, which can be added to an existing folder 2112, or to a newly created folder 2114.

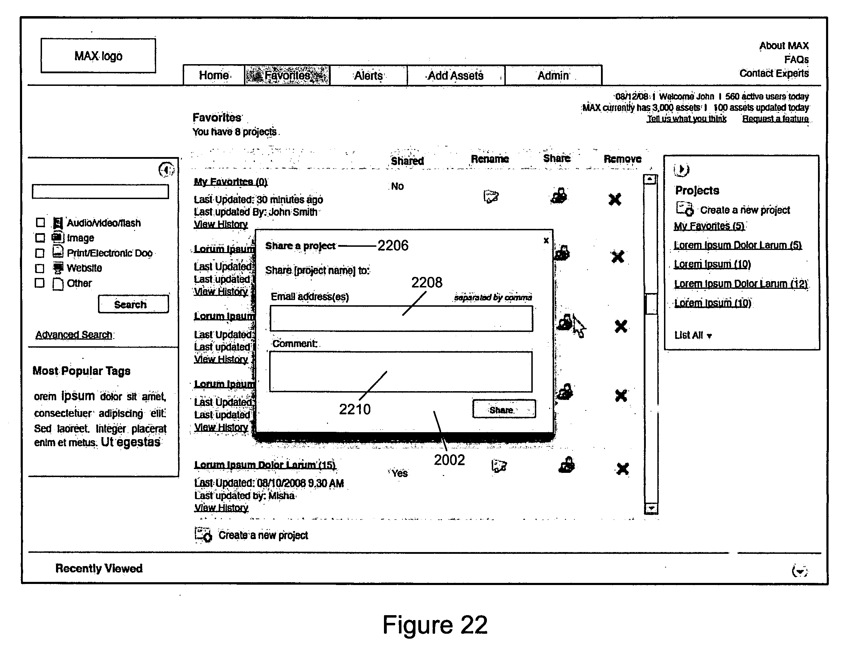

Figure 22 shows that a project folder 2002 may be shared with others, as indicated in the "share a project" dialog box 2206, by providing an email address 2208 and/or a comment 2210 corresponding to the user with whom the project will be shared. By adding a comment 2210, feedback can be provided to other shared users.

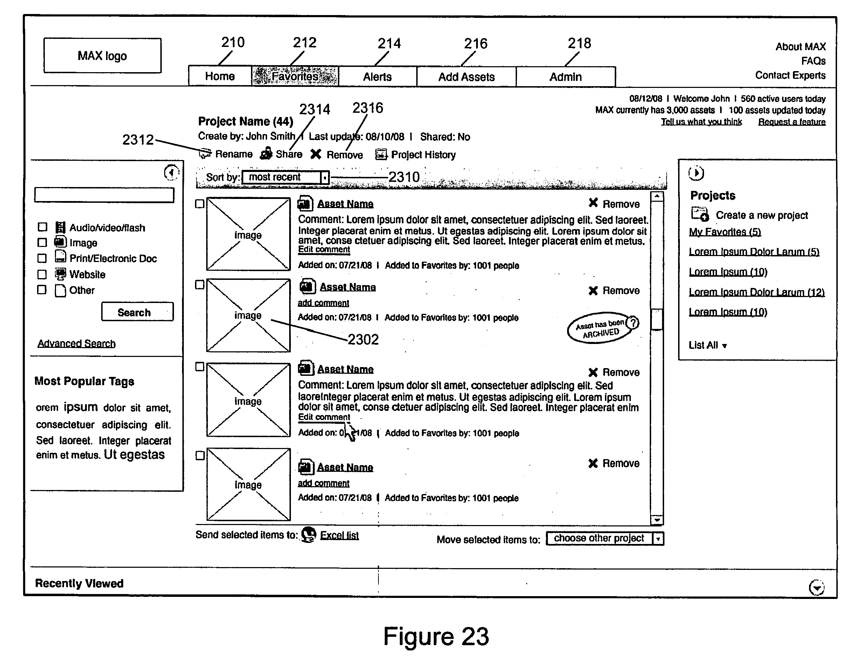

Figure 23 shows a different view of the favorites by showing an image 2302 of such favorite assets. The images may be sorted 2310, renamed 2312, shared 2314, and removed 2316.

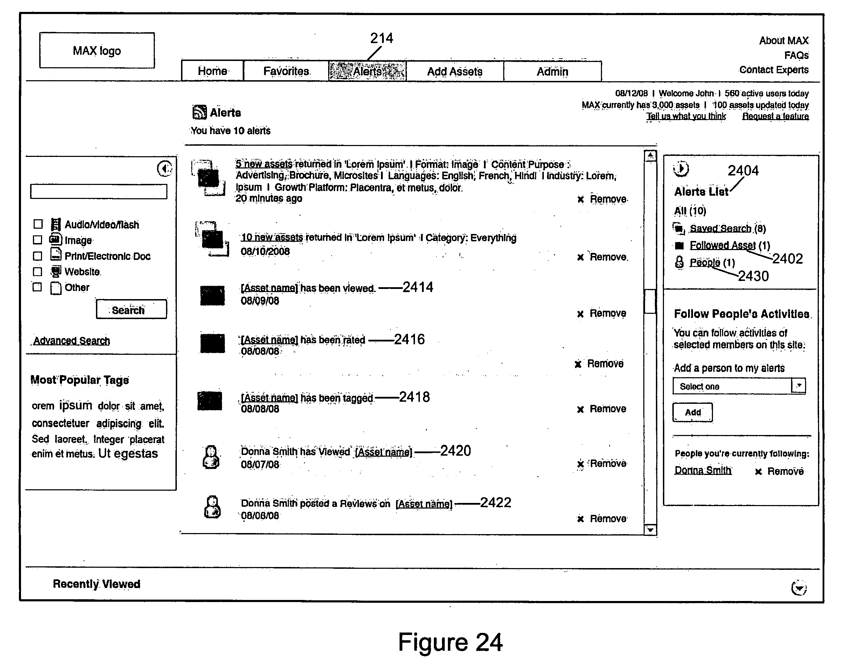

Figure 24 illustrates various alert functions based on the alerts tab 214. Alerts can be set by the user to track the activity of either an asset or a user. If an alert is set up to follow an asset, any time there is activity involving that asset, such as when another user views the asset or otherwise requests the asset, or when that asset is returned as part of an asset search, such activity is reported to the user who has requested the asset tracking capability.

In some embodiments, the system for Marketing Asset Exchange 100 may provides additional features and metrics, such as: 1) Follow an asset: following an asset to determine who has viewed, tagged, downloaded, rated or reviewed an asset, or added the asset to their favorites; 2) Activity by a user: tracking activity by user to see detailed activity by the user to track actions of the most enthusiastic users; 3) Total views, downloads, and asset ratings; 4) Basic and advanced searches executed by users and most popular tags; 5) Most popular, most viewed, and highest rated assets; 6) Assets tagged as favorites by users; 7) Views by format, content purpose, language, submitting entity, industry, growth platform, and high performance building block.

A particular asset may be tracked, as indicated by the "follow asset" indicator 2402 in an alert list 2404. The results of the tracking may indicate that an asset has been viewed 2414, that an asset has been rated 2416, and that an asset has been tagged 2418. Also shown is the identity of the user 2420 who has viewed the asset, and if the person viewing the asset has posted a review of the asset 2422.

If a user specifies that another user is to be followed or tracked, as indicated by a "people" indicator 2430 in the alert list 2404, the activities of the "tracked" user are reported to the "tracking" user. In one embodiment, preferably, only users in a particular department, such as the marketing communications department of a business organization, may be tracked. This may be used to aid the user and bring the "tracking" user up to speed on a particular project by reviewing the documents that the "tracked" user has viewed. This is based on the presumption that the tracked user has searched for and received relevant documents and that viewing such relevant documents will be helpful to the tracking user. In one embodiment, the various privacy issues may be resolved by notifying the tracked user that he or she is being tracked or requesting permission to be tracked.

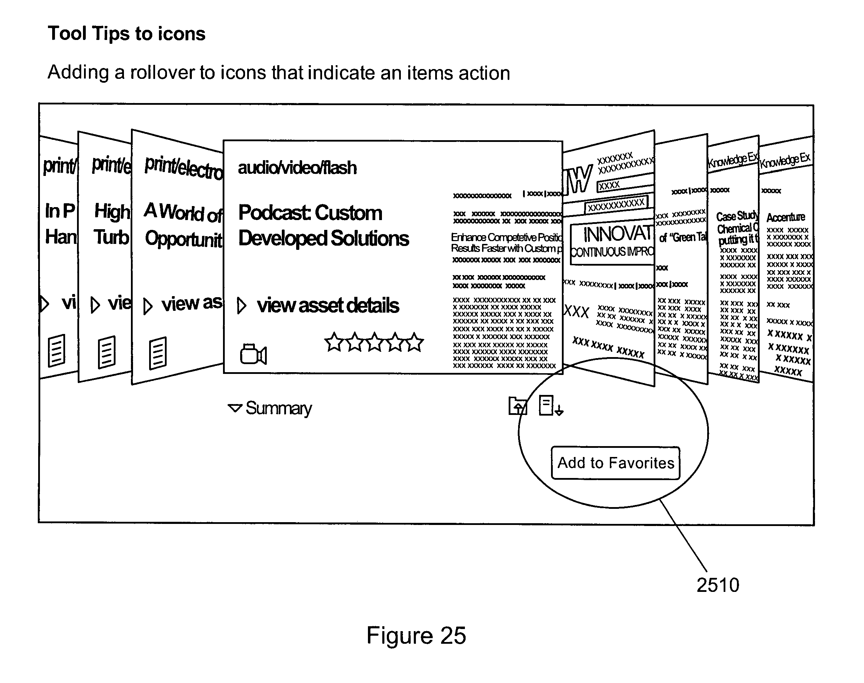

Figure 25 illustrates a rollover to icon feature based on cursor position. This provides additional assistance to the user so that when the user positions the cursor over a particular area of the screen, pertinent or corresponding text "pops-up" (2510) to further explain the icon or area over which the cursor is positioned or to provide an action item based on the current cursor position.

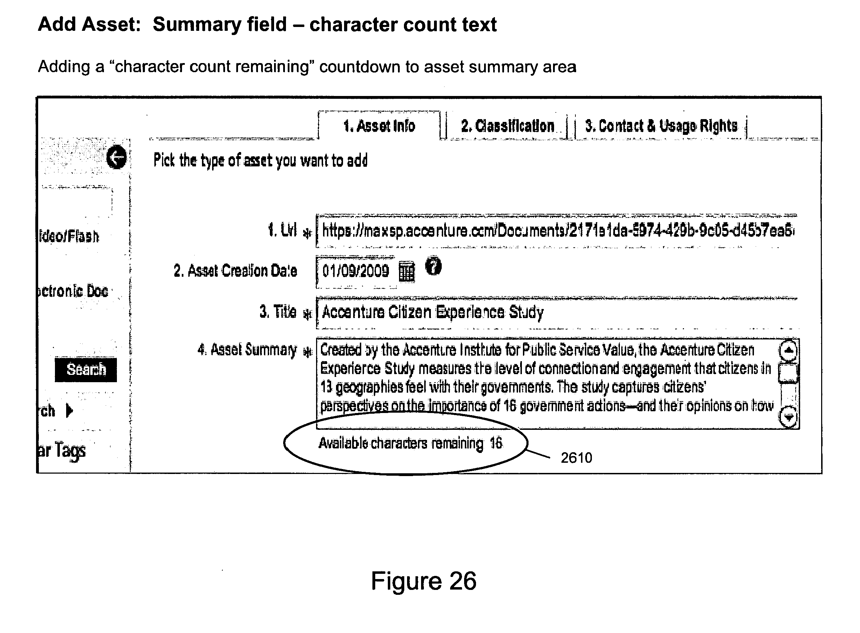

Figure 26 is a screen image that provides the user with a character count remaining value 2610 in the summary area. Because certain dialog boxes have character count limitations, the character count remaining value informs the user and provides an indication of the character space remaining indicating the number of additional characters that can be entered into the dialog box. When the character count remaining value becomes zero, no further typing by the user is permitted. In one embodiment, the character count remaining field is shown in the "detailed asset card" screen illustration of Figures 13-14. However, this feature can be incorporated into a screen where the number of characters allowed for entry is limited.

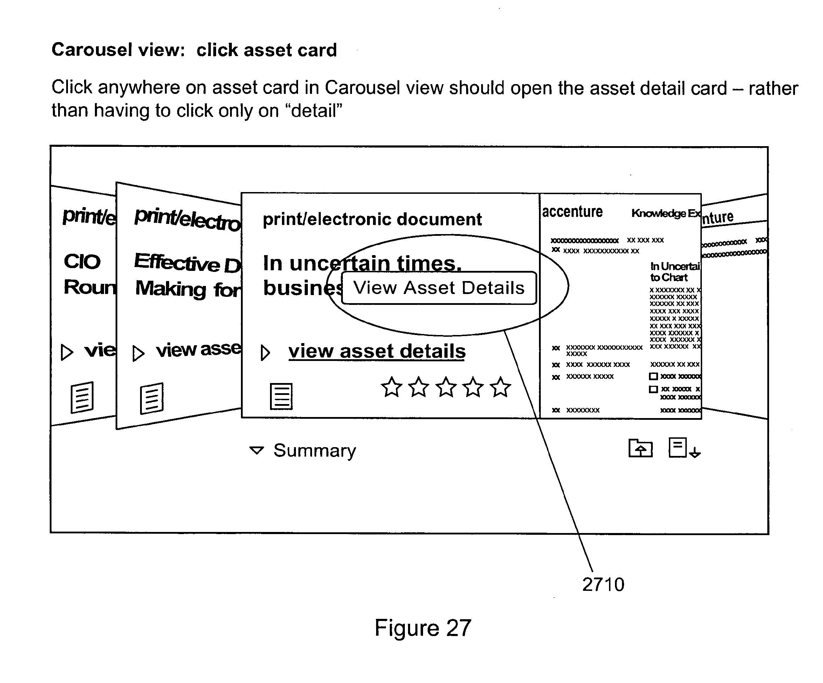

Figure 27 illustrates that the user can initiate the "carousel view" 2710 when the cursor is in any position in the "asset card" screen illustration, such as in the "detailed asset card" screen illustration of Figures 13-14. Thus, rather than requiring the user to click on a "detail link" to show additional information, as a convenience to the user, the carousel view is displayed if the user clicks anywhere in the asset card.

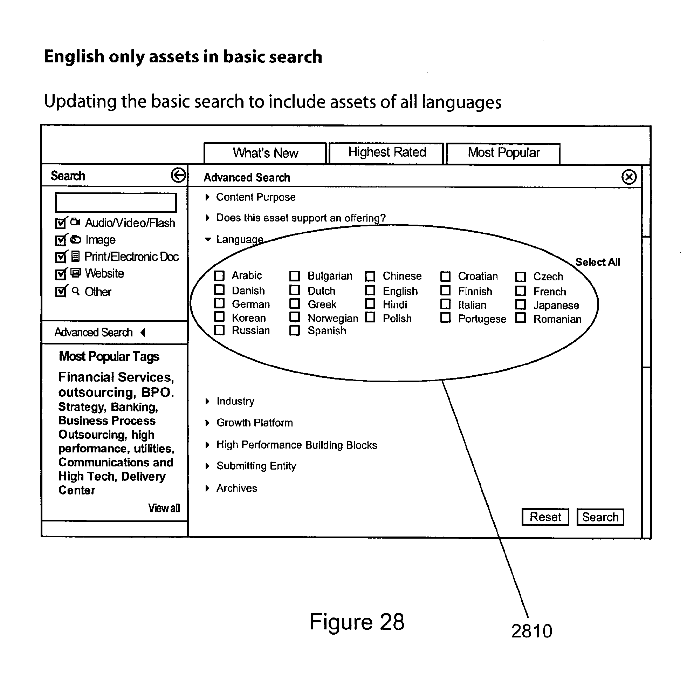

Figure 28 illustrates language selection 2810 when performing a search for a particular asset. In one embodiment, during a search for assets or documents, the system may return only English language documents as a default position. However, this may be somewhat limiting, and documents in other languages may be desired. Accordingly, the user may click one or more languages so that subsequent searches will retrieve documents in the selected languages.

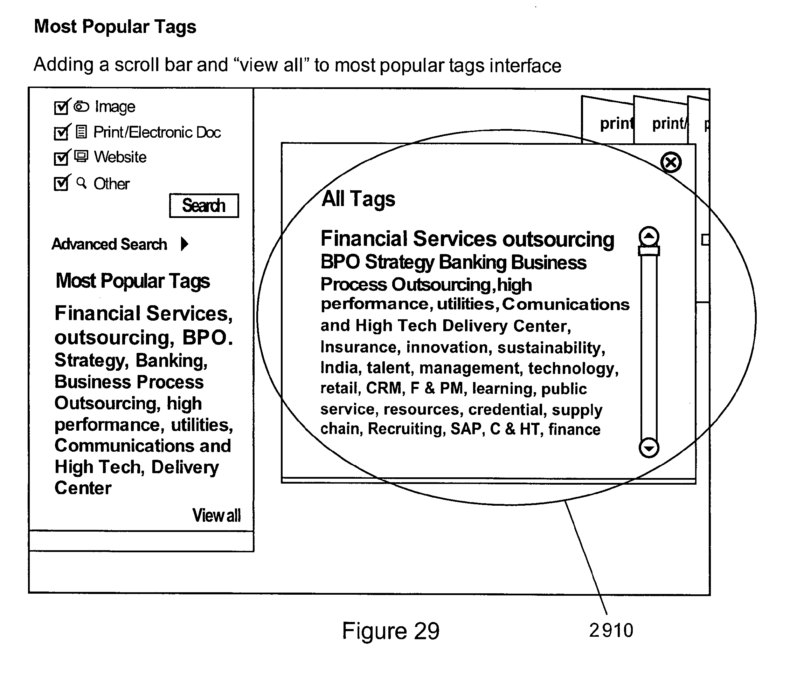

Figure 29 illustrates a scroll bar option associated with review of the most popular tags field 2910. By using the scroll bar, the user can scroll through all of the tags rather than being limited to a small number of tags.

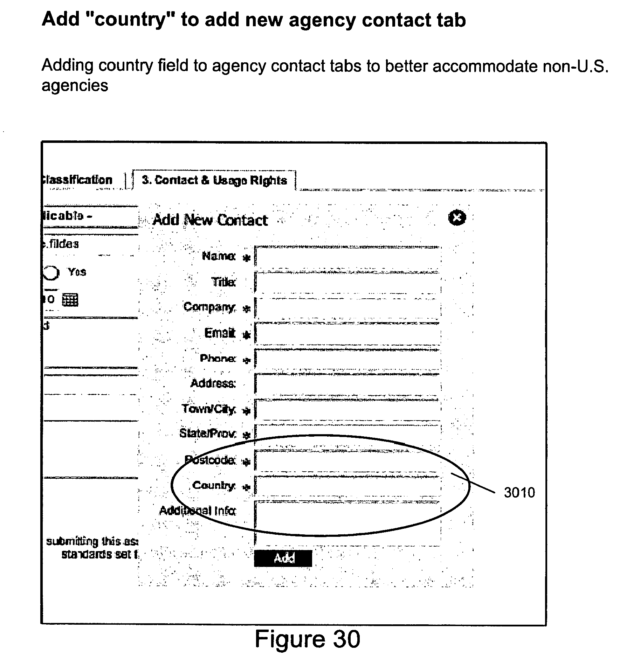

Figure 30 illustrates the country field 3010 corresponding to the "new agency contact" tab of a prior screen illustration. This permits the accommodation of agencies that are not based in the United States or default country.

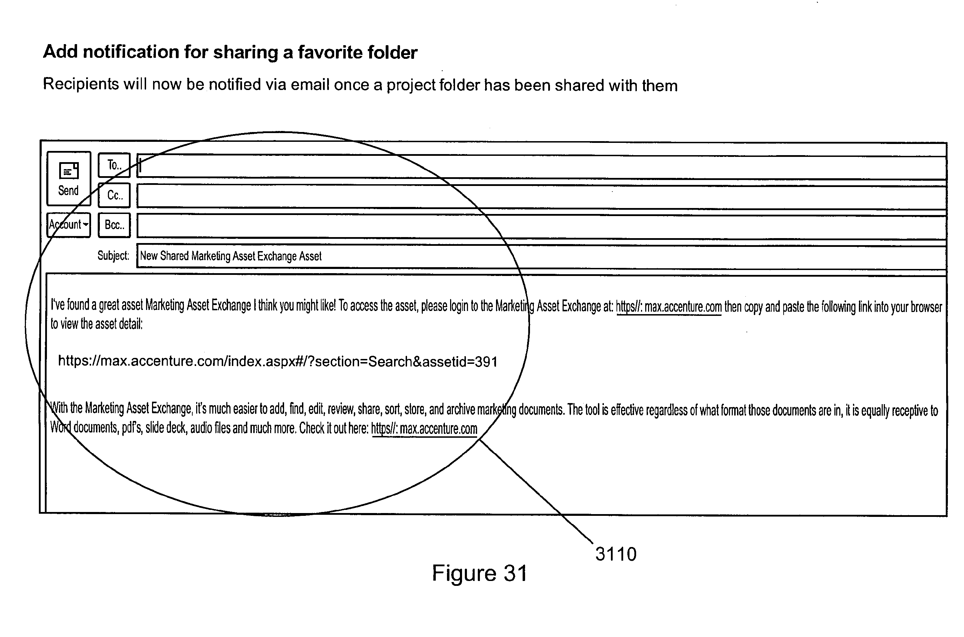

Figure 31 illustrates a notification 3110 that is issued when a "favorites folder" is shared. Thus, the user is notified by e-mail once a project folder has been shared with that user so that the user knows he or she can access the folder that is now given a shared status. This is a convenience to the user because the user need not log into the system in order to determine that he or she has access to the shared project folder.

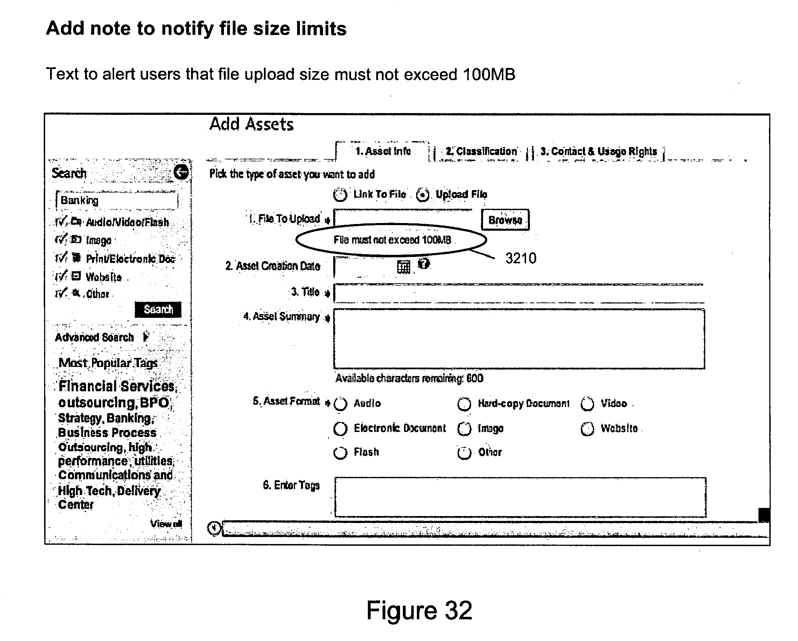

Figure 32 illustrates an alert that is provided to the user to warn the user of the maximum size of a file that can be added 3210. This warns the user that only files of a certain size can be added to the system. Without such a warning, a user may attempt to add an over-sized file repeatedly without success.

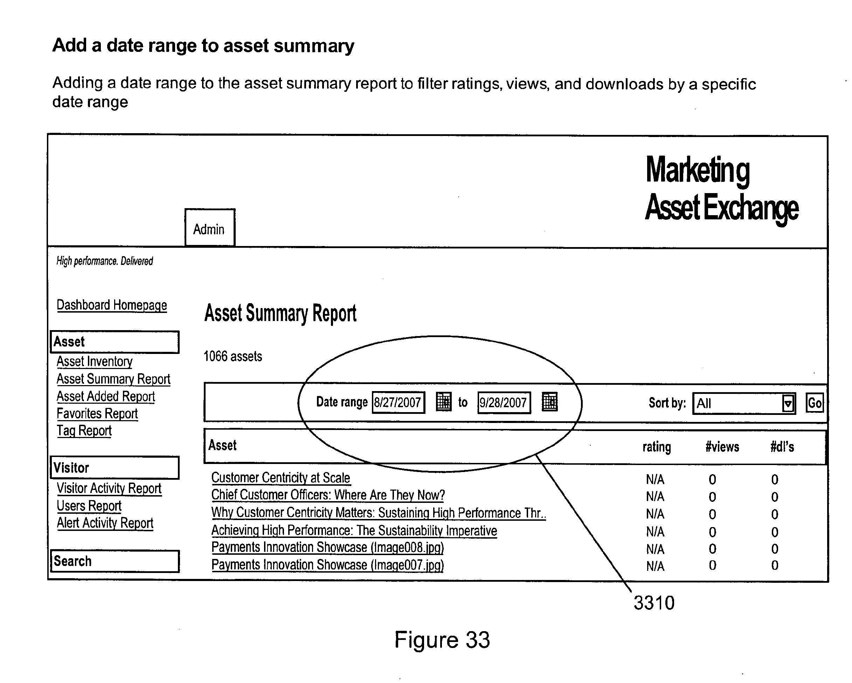

Figure 33 illustrates a date range 3310 in the asset summary report. Thus, when values are selected in the date range dialog box, only assets that have been created within the range specified are returned in a subsequent search. This acts as a filter to limit the scope of the asset search.

The system for Marketing Asset Exchange 100 provides the capability to track in real-time return on investment (ROI) on each asset investment, assess development pipelines, avoid duplication, and provide insight and metrics corresponding to users and/or the usage of each asset. Known tools do not provide a rating or feedback to allow for real-time input and continuous improvement of the system. The system for Marketing Asset Exchange 100 permits users to rate the content (assets) they have used in campaigns, thus providing ROI feedback to the content creator.

The system for Marketing Asset Exchange 100 provides insight and metrics corresponding to use, issues and preferences of assets, and provides real-time data reporting capability that allows a marketing & communications group to assess asset development pipelines and determine ROI. Content owners can download metrics reports from an administrative portal associated with the system for Marketing Asset Exchange 100.

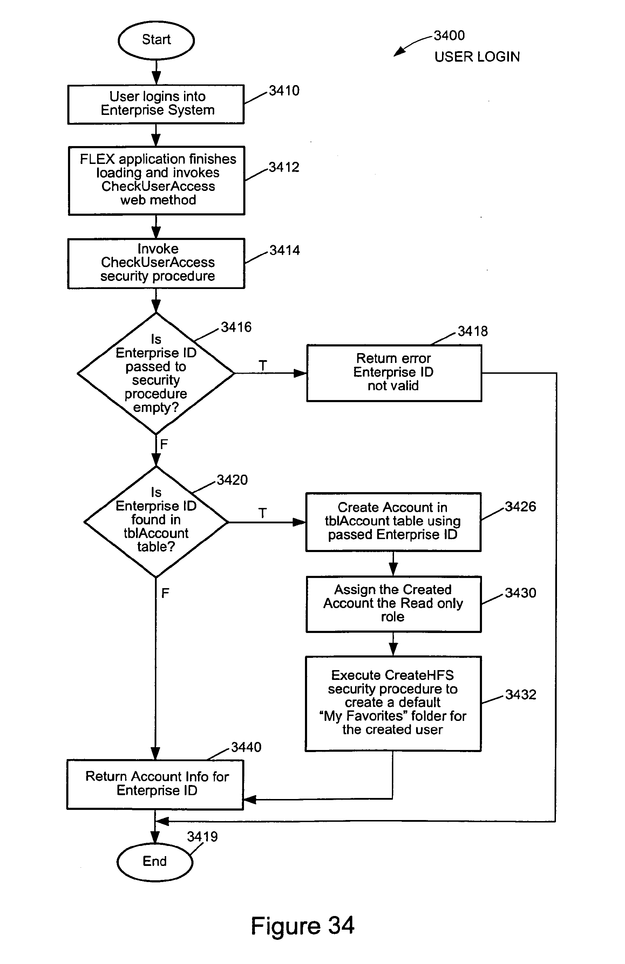

Figure 34 is a flowchart showing operation of the system 100, including steps (3400) that the system may take during a user login process. In one implementation, the steps (3400) represent the logic flow of login program instructions in the memory sub-system 126 executed under control of the processor 128. First, the user logs into an enterprise system (3410), which may verify user identification. Next, an application loads the carousel views shown in Figures 2, 3, 12, 21, and 25 (3412), and a security procedure verifies that the logged-in user has the appropriate level of clearance for system access (3414). If a user ID is not valid (3416), an error is returned (3418), and the routine terminates (3419). If the user ID is valid, meaning the user ID is found in the account table (3420), an account is created (3426), read only status is established for the account (3430), the "my favorites" capability is established (3432), and account information is returned for the corresponding enterprise ID (3440).

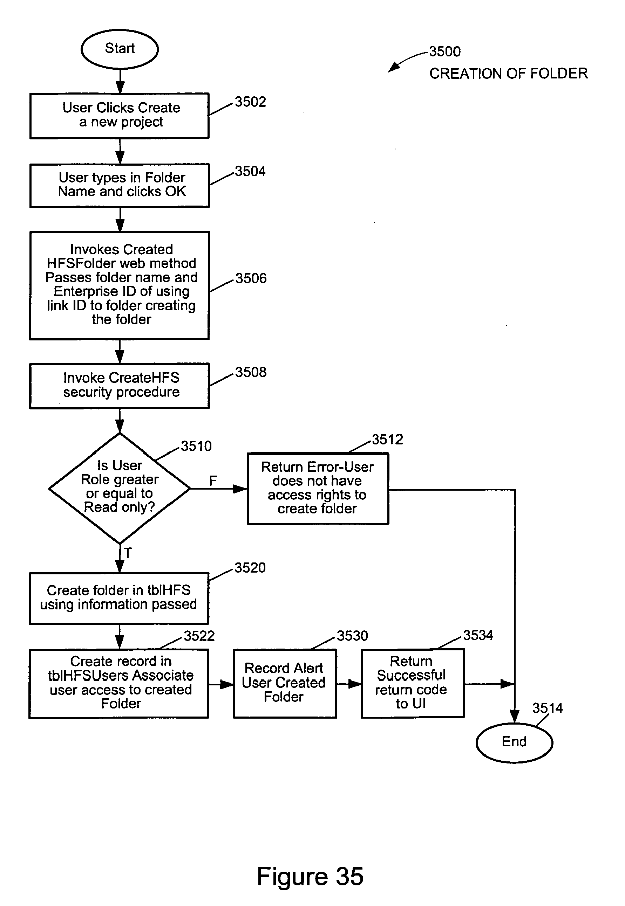

Figure 35 is a flowchart showing operation of the system 100, including steps (3500) that the system may take when creating a new folder. In one implementation, the steps represent the logic flow of new folder creation program instructions in the memory sub-system 126 executed under control of the processor 128. First, the user creates a new project folder (3502) and enters the folder name (3504). The user's ID is then linked to the folder name (3506) in accordance with the appropriate security procedure (3508). If the user only has "read-only" authorization (3510), an error is returned (3512) and the routine terminates (3514). If the user does have authorization greater than read-only status, the user folder is created (3520) and various records are associated with the newly created folder (3522). Successful creation of the user folder is recorded (3530) and a corresponding code is returned (3532) before the routine terminates (3514).

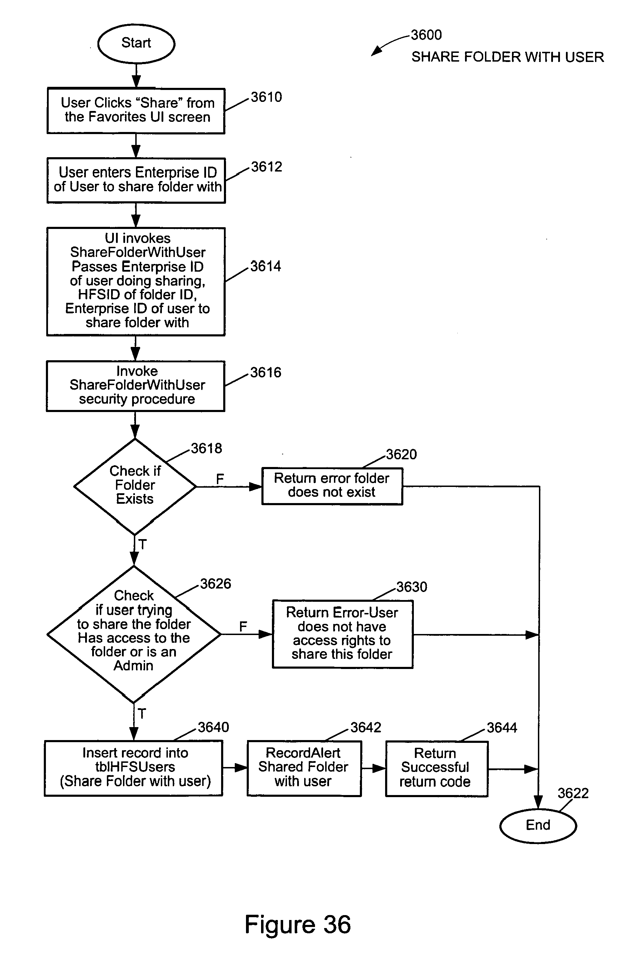

Figure 36 is a flowchart showing operation of the system 100, including steps (3600) that the system may take when a user shares a folder. In one implementation, the steps (3600) represent the logic flow of folder sharing program instructions in the memory sub-system 126 executed under control of the processor 128. First, the user clicks the "share" button in the user interface screen (3610) and enters the enterprise ID of the user who is permitted to share the folder (3612). Sharing privileges are then verified (3614) and the security procedure is notified (3616). If the folder to share does not exist (3618) an error code is returned (3620), and the routine terminates (3622).

If the folder to share does exist, access authorization is checked to determine if access is permitted (3626). If the user does not have the appropriate access authorization, an error code is returned (3630), and the routine terminates (3622). If access authorization is approved, the appropriate records are manipulated to facilitate sharing of the folder (3640), an indication is recorded to show that folder sharing is in progress (3642), a code is returned indicating successful folder sharing (3644), and the routine terminates (3622).

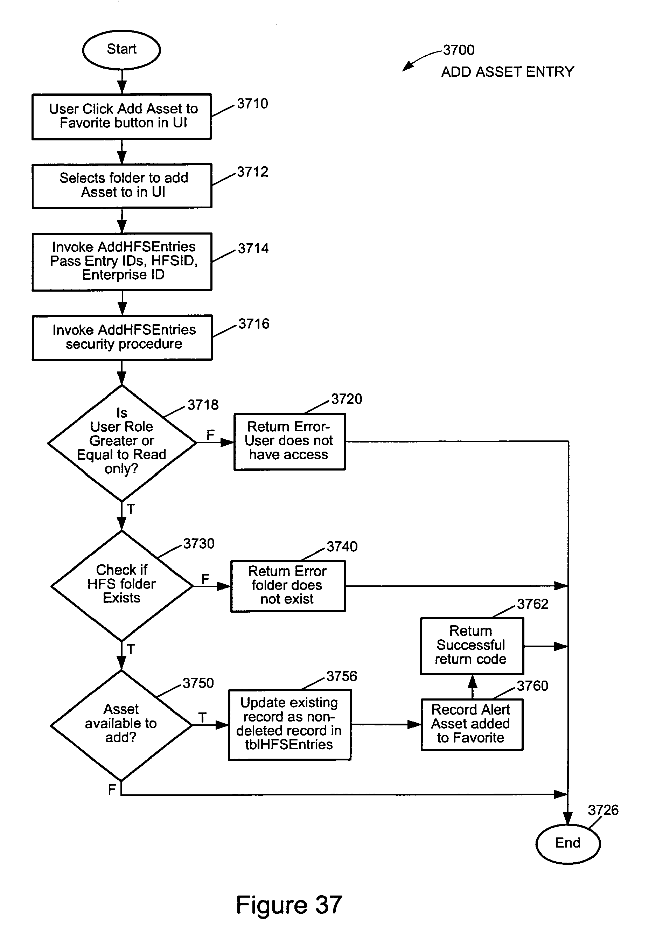

Figure 37 is a flowchart showing operation of the system 100, including steps (3700) that the system may take when adding an asset entry to a favorites folder. In one implementation, the steps (3700) represent the logic flow of adding an asset to favorite program instructions in the memory sub-system 126 executed under control of the processor 128. First, the user clicks the "add asset" button in the user interface screen (3710) and selects the folder into which the asset is added (3712). Next, the user's level of authorization is checked to determine if the user has access to the desired asset and is able to get the asset to the selected folder (3714) and the corresponding security procedure is invoked (3716). If the user only has "read-only" authorization (3718), an error is returned (3720) because the user is not permitted to add an asset, and the routine terminates (3726).

If the user does have authorization greater than read-only status, but the folder in which to add the asset does not exist (3730), an error code is returned (3740), and the routine terminates (3726). If the asset is available to add to the folder (3750), the record is updated (3756), an alert is added to indicate an added asset (3760), a code is returned indicating successful addition of the asset to the folder (3762), and the routine terminates (3726).

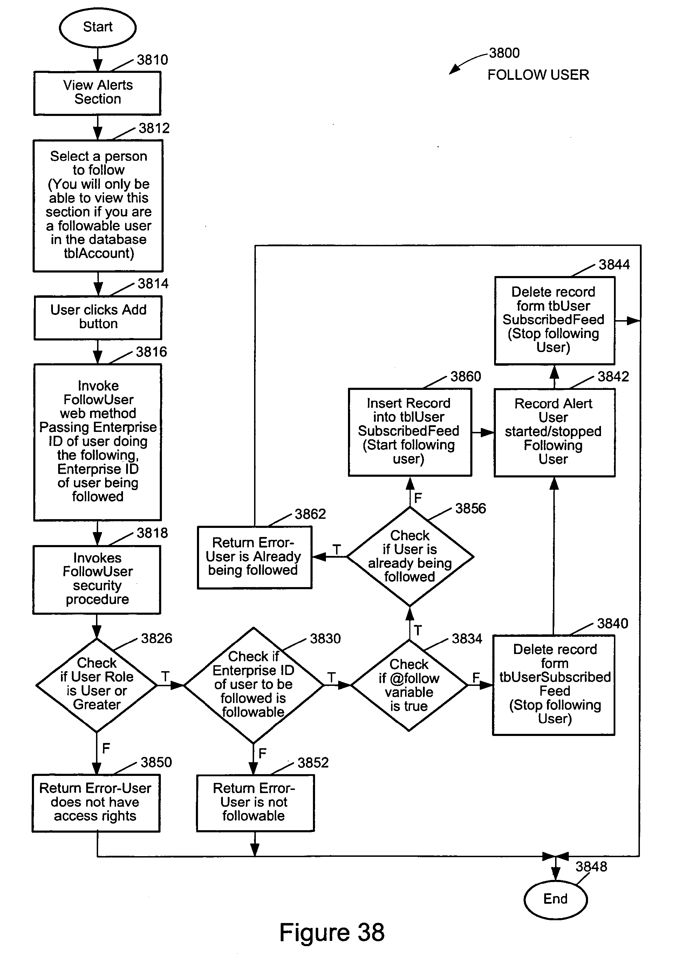

Figure 38 is a flowchart showing operation of the system 100, including steps (3800) that the system may take when viewing alerts and tracking a user. In one implementation, the steps (3800) represent the logic flow of viewing alerts and tracking user program instructions in the memory sub-system 126 executed under control of the processor 128. First, a user clicks the "view alert" button in the user interface screen (3810), and selects a person whose search activity the user wishes to follow and track (3812). Following another user permits the current user to gain educational insight with respect to certain search activities.

The user then clicks the "add button" (3814) and the system 100 invokes the appropriate application using the corresponding enterprise IDs (3816) and the security procedure (3818). If the user has the appropriate level of authorization (3826) and if the enterprise ID of the user to be followed permits following (3830), a "follow" variable is checked (3834) to determine if following is to be terminated. If following is to be terminated, the corresponding record is deleted (3840), starting or stopping of the follow process is recorded (3842), final records are deleted (3844), and the routine terminates (3848). Further, if the user does not have the appropriate level of authorization (3826) or if the enterprise ID of the user to be followed does not permit following (3830), error codes are returned (3850, 3852), and the routine terminates (3848).

If the "follow" variable indicates that following is allowed (3834), a check is performed to determine if that user is already being followed (3856), and if so, an error code is returned indicating that the user is already being followed (3862), and the routine terminates (3848). If the user to be followed does not appear on a follow list (3856), the appropriate record is set for the user performing the follow action of the user to be followed (3860), and starting or stopping of the follow process is recorded (3842). Once the follow user process has been successfully invoked, an indication of such user following appears on the user's interface to indicate that the follow user process is running.

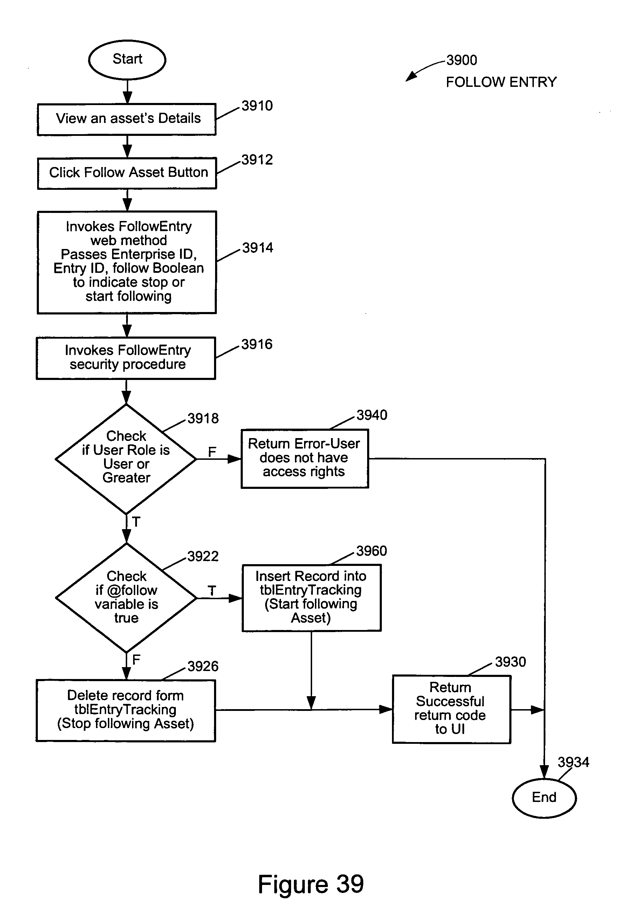

Figure 39 is a flowchart showing operation of the system 100, including steps (3900) that the system may take when viewing alerts and tracking an asset (rather than following a user (3800)) so that the user can determine when a particular asset has been updated or changed. In one implementation, the steps (3900) represent the logic flow of viewing alerts and the tracking of asset program instructions in the memory sub-system 126 executed under control of the processor 128. First, a user clicks the "view asset details" button at the user interface screen (3910), and the system 100 invokes the appropriate application by using the corresponding enterprise IDs (3914) and the security procedure (3916).

If the user has the appropriate level of authorization (3918), a "follow" variable is checked (3922) to determine if asset following is to be terminated. If asset following is to be terminated, the corresponding record is deleted (3926), a code is returned indicating termination of the asset tracking process (3930), and the routine terminates (3934). If the user does not have the appropriate level of authorization (3918), an error code is returned (3940), and the routine terminates (3934). If the user has the appropriate level of authorization (3918) and the "follow" variable indicates that asset tracking is appropriate (3922), then the appropriate records are manipulated to facilitate the asset following process (3960), a code is returned indicating successful asset following (3930), and the routine terminates (3934). Once the follow asset process has been successfully invoked, an indication of such assets following appears on the user's interface to indicate that the follow asset process is running.

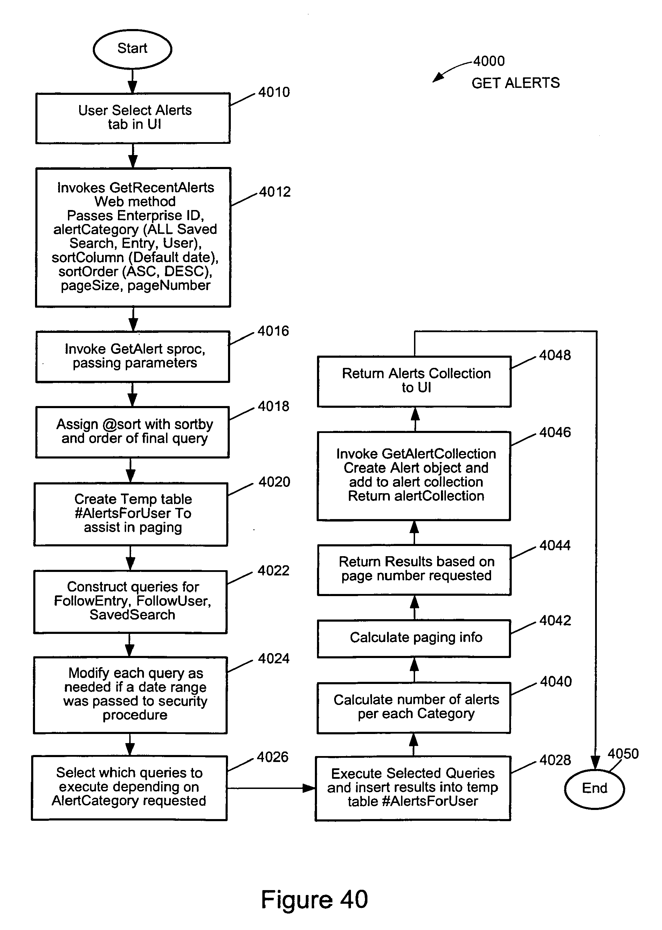

Figure 40 is a flowchart showing operation of the system 100, including steps (4000) that the system may take when obtaining alerts. In one implementation, the steps (4000) represent the logic flow of obtaining alerts program instructions in the memory sub-system 126 executed under control of the processor 128. First, a user clicks the "select alerts" button at the user interface screen (4010), and the system 100 invokes the appropriate application using the corresponding enterprise IDs (4012) and the security procedure (4016).

By selecting an "alert," the user can provide another user with an update on various actions or occurrences, whether related to a particular user or a particular asset. Next, so that the alert notification appears properly on the user interface, ordering is set (4018), paging tables are established (4020), queries are established to facilitate the alerts (4022), and end date ranges are provided (4024). Query selection is then established (4026), the selected queries are executed (4028), the number of alerts is calculated (4040), and paging information is calculated (4042). Next, the results are returned (4044), alert objects are created (4046) and returned (4048), and the routine terminates (4050).

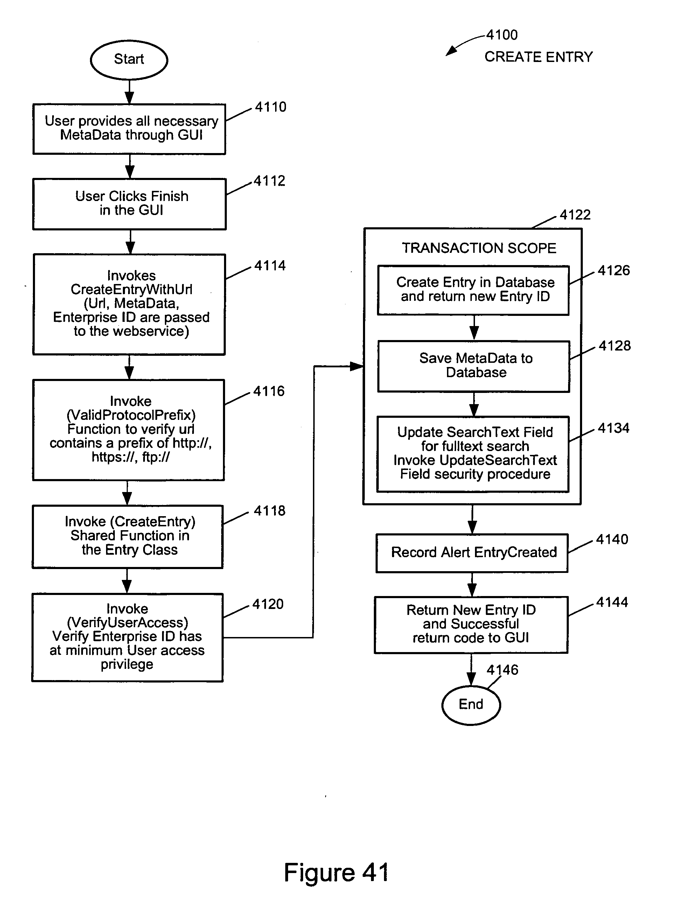

Figure 41 is a flowchart showing operation of the system 100, including steps (4100) that the system may take when creating an asset entry, such as a detailed asset card. In one implementation, the steps (4100) represent the logic flow of creating asset entry program instructions in the memory sub-system 126 executed under control of the processor 128. The user provides the interface with the necessary details for the asset card (4110) using the graphical user interface (4112), and the system 100 invokes the appropriate application using the corresponding enterprise IDs and the security procedure (4114). Next, the URL of the asset is verified (4116). The system then checks to determine if all the required fields are filled in properly (4118) and that the user has the appropriate authorization to create the detailed asset card (4120).

The asset card is then created (4122) by establishing an entry ID number in the database (4126) saving the corresponding metadata in the database (4128). The search field allows the newly created asset card to be searchable in the database (4134). Note that the asset owner or creator is responsible for establishing the metadata tags or information. Based on the expertise of the user, entry of the appropriate metadata information significantly increases the relevancy of the asset so that other users searching for particular information are provided with accurate or desired search results.

Because the assets stored in this database, namely the Marketing Asset Exchange database 306, are directed to marketing information, the creator of the asset establishes the metadata tags specifically for use by marketing-related personnel so that searching by such personnel yields cogent search results. The record corresponding to the newly created asset is then recorded (4140) in the system, the ID of the newly created asset is returned so that the new asset is shown to the user at the user interface screen (4144), and the routine terminates (4146).

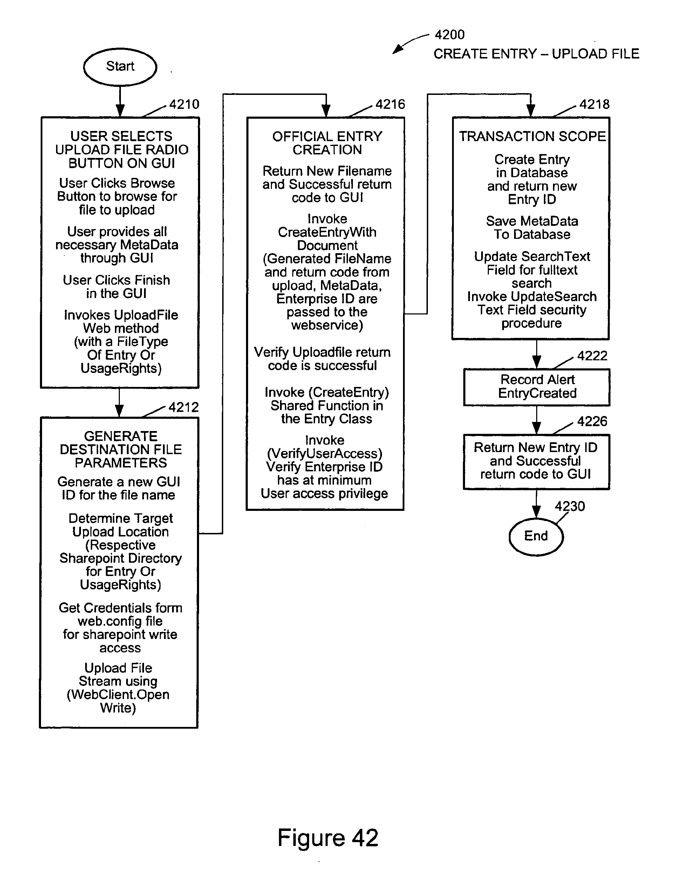

Figure 42 is a flowchart showing operation of the system 100, including steps (4200) that the system may take when uploading files corresponding to asset entries. In one implementation, the steps (4200) represent the logic flow of file uploading program instructions in the memory sub-system 126 executed under control of the processor 128. First, a user clicks the "upload" button at the user interface screen (4210) to add an asset to the database which is not entered through a URL, but rather is entered by a direct upload process.

Thus, if a particularly relevant asset exists in one of the databases, such as the preferred sources databases 308, the company enterprise database 310, or if the relevant asset exists externally, the relevant asset may be obtained from its source and stored directly in the Marketing Asset Exchange database 306. The processes outlined at 4210 where the user adds the necessary metadata invokes the process to upload the file or relevant asset. Next, the parameters of the destination file corresponding to the relevant uploaded asset are established (4212).

In this process, the location of the destination file is established along with a new name for the file that is associated with the corresponding detailed asset card, and the various credentials are verified. Once the file or relevant asset has been successfully uploaded, the official entries are created (4216). In this process, appropriate return codes are provided to the graphical user interface, and the appropriate security procedure verifies the establishment of the file and associated privileges. Accordingly, the newly created asset is now visible to the user in the graphical user interface. Next, the transaction scope is then established (4218), which provides the entry ID of the new asset created in the database, saves the metadata, and provides updated text for searching. The creation of the entry is then recorded (4222), the entry ID of the new entry is returned to the graphical user interface (4226), and the routine terminates (4230).

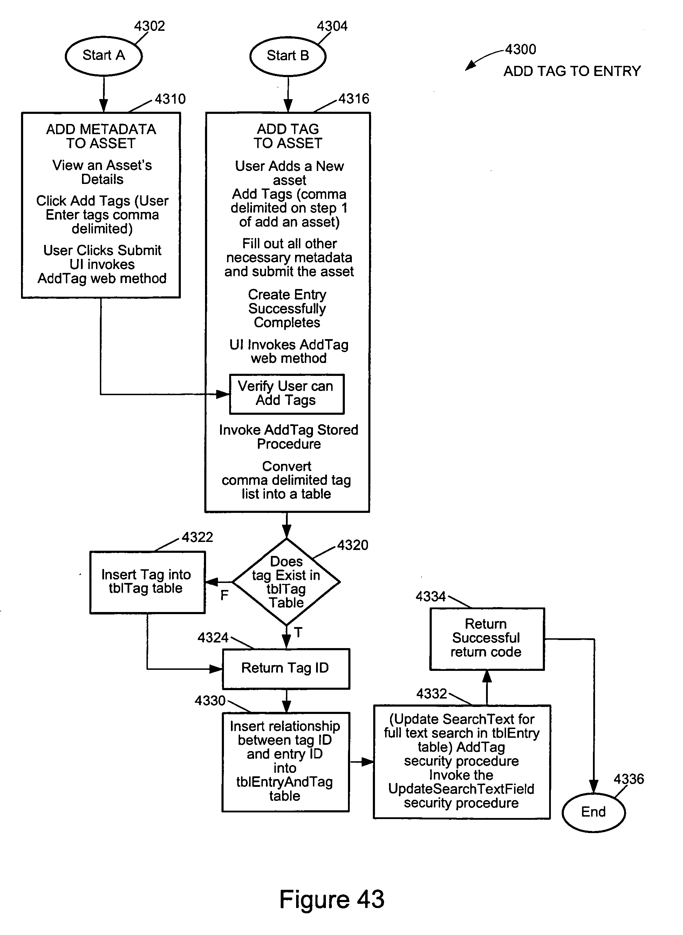

Figure 43 is a flowchart showing operation of the system 100, including steps (4300) that the system may take when adding tags to asset entries. In one implementation, the steps (4300) represent the logic flow of adding tags program instructions to the memory sub-system 126 executed under control of the processor 128. This process (4300) permits the user to view an asset's detailed information to seal information that the owner of the asset provided to the system 100. This process is represented as having two entry points referred to as A (4302) and B (4304).

Based on the first entry point at A (4302), a user can add tags or metadata to the asset or detailed asset card even though that user is not the owner or creator of the asset (4310). Based on the second entry point at B (4304), a user can add new asset tags and submit the asset tags or metadata to the system 100 (4316). In this process, the tags are fully added, a check is made to determine if the user is authorized to add tags, and various text is converted with respect to formatting procedures. Next, the tag is checked to see if it already exists in a "most popular tags" section of the graphical user interface (4320). If the tag to be edited by the user does not exist, the tag is inserted (4322), and the tag ID is returned. If the tag exists, the ID of the tag is returned (4324). Next, the relationship between the tag ID and the entry ID is established (4330), the tag is added and the system is updated (4332), a code is returned indicating a successful process (4334), and the routine terminates (4336).

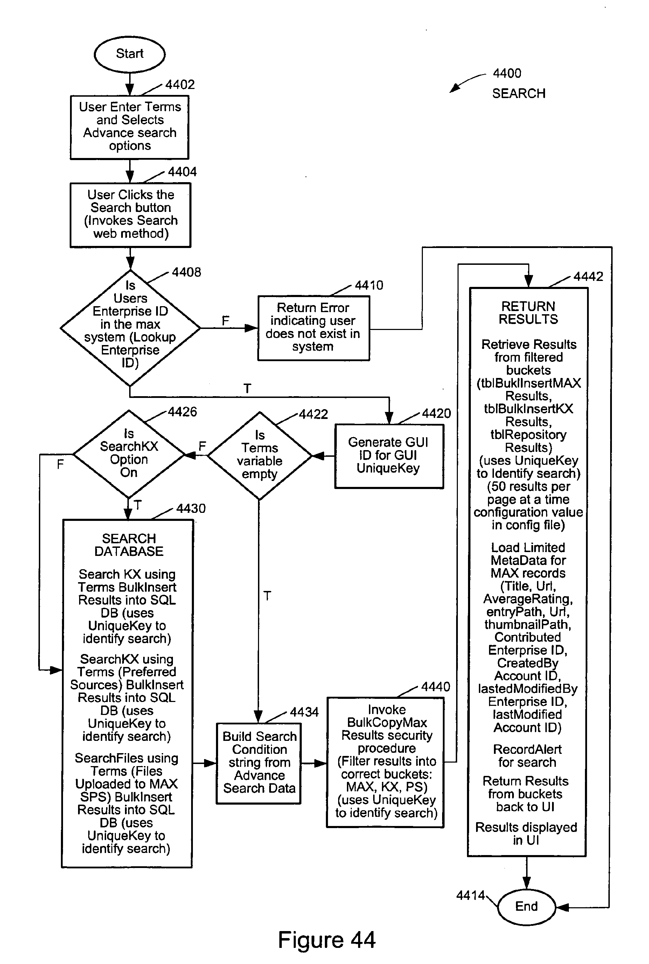

Figure 44 is a flowchart showing operation of the system 100, including steps (4400) that the system may take when performing a search. In one implementation, the steps (4400) represent the logic flow of performing search program instructions in the memory sub-system 126 executed under control of the processor 128. First, the user enters the search terms to be searched (4402), and advanced searching criteria may be entered if desired. The user then clicks the "search" button to invoke the search process (4404).

If the enterprise ID of the user cannot be found (4408), an error code is returned (4410), and the routine terminates (4414). If the enterprise ID is found, the graphical user interface is checked to verify that the term has been entered (4420), and if a search term has been entered (4422), the graphical user interface is checked to determine if the user requested a search of the company enterprise database 310 (4426). The selected databases are then searched (4430). Next, after the search is performed (4430) or if the search term is empty (4422), a search condition string is built (4434) and various filtering is accommodated (4440).

The results are then retrieved (4442), which include recording the search and displaying the results to the user in the graphical user interface. Recording the search permits the search to be rerun at a later time without requiring entry of the search requirements. After the results are retrieved and displayed (4442), the routine terminates (4414).

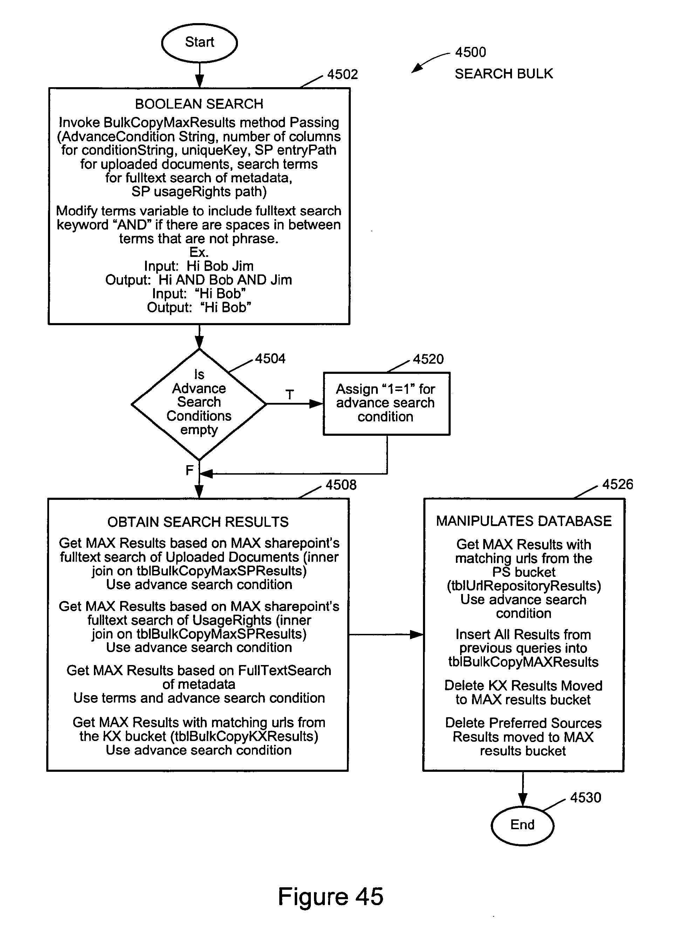

Figure 45 is a flowchart showing operation of the system 100, including steps (4500) that the system may take when performing a bulk search. In one implementation, the steps (4500) represent the logic flow of performing bulk search program instructions in the memory sub-system 126 executed under control of the processor 128. First, the user enters a search string or bulk search term to be searched (4502).

Various Boolean-type searches may be accommodated in this process. If the advanced search criteria are not selected (4504), the specified search results are obtained (4508) based on the records contained in the Marketing Asset Exchange database 306. If the advanced search criteria is not selected (4504), the advanced search criteria variable is set (4520), and the specified search results are obtained (4508). After the specified search results are obtained (4508), the assets found as a result of the search in different databases, such as the Marketing Asset Exchange database 306, preferred sources databases 308, and a company enterprise database 310, are manipulated so as to maintain the Marketing Asset Exchange database 306 as the primary database having the most relevant assets (4526). For example if an asset is found in both the company enterprise database 310 and the Marketing Asset Exchange database 306, the duplicate asset is deleted from the company enterprise database 310. The routine then terminates (4530).

The above-described software and software modules, including the Web page format generation and screen output format, may be developed on a variety of development tools and integration platforms. For example, such software and development tools may include Internet Information Services (IIS) 6.0, ASP.NET 2.0, Visual studio 2005/2008, Microsoft Enterprise Library, Microsoft.NET 3.5 Framework (C# for Admin pages, VB.NET for WCF services), Avanade BDS tool (used for deployment), Nunit 2.4.8, MS Office 2007, and SQL server 2005.

The following table is an example that shows eleven specific Web services and about one-hundred specific Web methods that may be included in the software or modules of the system for Marketing Asset Exchange 100. Other functions and modules may be included. The system 100 may include additional Web services and Web methods, or may be implemented using fewer Web services and Web methods. Such Web services and methods may be implemented using the industry standard developed in accordance with Service Oriented Architecture (SOA). The general categories of Web services include alert services, entry services, expert services, file upload services, HFS services, metrics services, people services, ratings services, review services, search services, and user services. Within each category of Web service, one or more specific Web methods are identified and described.

| SERVICE | AlertService | |
|---|---|---|
| SL No | Web Methods | Description |
| 1 | GetAlertsByDateRange | Gets Alerts for specified Enterprise ID in specified date ranges |
| 2 | GetRecentAlerts | Gets alerts for specified Enterprise ID |
| 3 | FollowEntry | Starts/stops following an entry |
| 4 | GetUsersFollowingUser | Returns all users following a user. |
| 5 | GetUsersFollowedByUser | Returns all users being followed by a specified user. |
| 6 | FollowUser | Starts/stops following a user. Only works if both users are followable. |
| 7 | RecordEntryDetailsViewed | Records information indicating a user has viewed the entry details of the specified entry ID |
| 8 | RecordEntryDownloaded | Records information indicating a user has downloaded the entry associated with the provided entry ID. |
| 9 | GetFolderHistory | Gets alerts for specified folder ID. Gets the history of the folder |

| SERVICE | EntryService | |
|---|---|---|
| SL No | Web Methods | Description |
| 1 | CheckForExistingUrl | Checks to ensure the URL does not already exist in the system |
| 2 | DeleteEntry | Deletes an existing entry |
| 3 | CreateEntryWithDocument | Creates n new entry with an uploaded document to sharepoint |
| 4 | CreateEntryWithUrl | Creates a new entry with a URL (Link to a webpage or document). (No file uploaded to sharepoint.) |
| 5 | UpdateEntry | Updates an existing entry |
| 6 | GetEntryDetails | Gets the entry details of an entry |
| 7 | GetAllEntries | Gets all entries in an HFS folder (Favorite) |
| 8 | GetAllEntriesByUser | Get all entries created by a specified user |
| 9 | GetExpiredEntries | Returns expired entries inside the a specified folder |
| 10 | GetNewEntries | Gets top 25 new entries added to the Marketing Asset Exchange system |
| 11 | GetFieldsAndValidValues | Gets a list of all fields and valid choices associated with those fields. Returns all metadata columns and their choices |
| 12 | AddTag | Adds a tag to an entry |
| 13 | GetTagCloudForAllEntries | Gets top 25 tag cloud for all entries in the system |
| 14 | GetTagCloudForEntry | Returns a tag cloud for an entry |
| 15 | GetAllEntriesWithTags | Searches for entries with the provided tags |
| 16 | GetComment | Gets a user's personal comment for the specified entry |
| 17 | AddComment | Adds a user's personal comment to an entry |
| 18 | AddContact | Adds a contact to the Marketing Asset Exchange system |
| 19 | GetTotalViewsForEntry | Returns the total number of times an entry was viewed |

| SERVICE | ExpertsService | |
|---|---|---|
| SL No | Web Methods | Description |
| 1 | Search | Searches for experts and returns a list of experts associated with the search term |

| SERVICE | FileUploadService | |
|---|---|---|
| SL No | Web Methods | Description |
| 1 | UploadFile | Uploads a file to Marketing Asset Exchange Sharepoint |

| SERVICE | HFSService | |
|---|---|---|
| SL No | Web Methods | Description |
| 1 | CreateHFSFolder | Creates a new folder (Favorite location) |
| 2 | RemoveHFSFolder | Removes a user's association with a folder |
| 3 | UpdateHFSFolder | Renames a folder |
| 4 | AddHFSEntries | Adds an list of entries or entry to a specified folder (Favorite) |
| 5 | RemoveHFSEntry | Soft deletes an entry from a folder |
| 6 | ShareFolderWithUser | Shares a folder with another user of the Marketing Asset Exchange system |
| 7 | ViewEntriesInFolder | Gets a list of entries in a folder |
| 8 | GetMostPopularEntries | Gets top 25 favorite entries (added to a folder) |
| 9 | GetFoldersForUser | Gets a list of folders to which a user has access |
| 10 | GetUsersSharingFolder | Gets a list of users sharing a folder |

| SERVICE | MetricsService | |
|---|---|---|
| SL No | Web Methods | Description |
| 1 | ListOfUsersWithUsageRights | Exports a list of users with usage rights. Returns a collection of users (user ID and enterprise ID) and their associated roles (role ID and role name) |
| 2 | DailyEntryCountsWithinDateRa nge | Retrieves the daily entry count for added entries within a specific date range. |
| 3 | DailyDownloadCountsWithinDa teRange | Retrieves the daily count of entries downloaded within a specific date range |
| 4 | DailyViewCountsWithinDateRa nge | Retrieves the daily count of entries viewed within a specific date range |
| 5 | DailyCountOfAddedEntriesWith inDateRange | Retrieves the daily entry count for added entries within a specific date range. Returns a collection of the dates within the range and the amount of entries added each day. |
| 6 | TitlesAddedWithinDateRange | Displays the titles added within a date range |
| 7 | DailySearchCountsWithinDateR ange | Retrieves the daily search count for a specific date range. |
| 8 | CountOfLoginsByEachUserWith inDateRange | Retrieves the number of logins by each user within a date range. |
| 9 | EntriesAddedByUserWithinDate Range | Retrieves a list of entries added for each user within a date range |
| 10 | DailyLoginCountsWithinDateRa nge | Retrieves the daily login count for a specific date range. |
| 11 | EntriesDownloadedWithinDateR ange | Within a date range, displays the entries downloaded and outputs the total number of entries downloaded |
| 12 | TopNMostFavoritedEntries | The top n list of unarchived entries that are in a folder and number of folders they are in |
| 13 | AlertAgainstEntriesWithinDateR ange | Reports the activity in question for each entry against where there was activity |
| 14 | ForEachPersonThePeopleTheyF ollowAtTime | At a point in time, for each person, a list of people the person is following |
| 15 | DailyCountOfPeopleAndEntries BeingFollowedWithinDateRange | Within a date range, by day, the number of people and the number of entries being followed |
| 16 | TopNMostHighlyRatedEntries | Retrieves top number of entries and calculates average rating per entry |
| 17 | TopNMostDownloadedEntries | Gets the top 'n' downloaded entries |
| 18 | TopNMostAppliedTagsWithinD ateRange | Within a date range, the most 'n' popular tags |
| 19 | CountOfEntriesByContributor | For every contributor, number of unarchived entries for that contributor |
| 20 | TopNMostFavoriteArchivedEntr iesWithinDateRange | Within a date range, the top n list of archived entries that are in a folder and number of folders they are in. |
| 21 | TopNMostFavoriteUnarchivedE ntriesWithinDateRange | The top n list of unarchived entries that are in a folder and the number of folders in which they are located |
| 22 | DailyFavoriteCountsWithinDate Range | The daily favorite counts within date range |
| 23 | DailyTagCountsWithinDateRange | The daily tag counts within date range |
| 24 | CountOfEntriesWithEachMetada taLabelValuePairWithinDateRange | Within a date range, for each metadata label: value pair, the number of entries and views that include that pair |
| 25 | CountOfFullTextSearchTermCo untsWithinDateRange | Within a date range, all full-text search terms used and the counts associated with each |
| 26 | CountOfAllMetadataLabelValue PairsWithinDateRange | Within a date range, all of the metadata labels: value pairs and the number of times they were used in searches. |
| 27 | UserActivityReportWithinDateR ange | Within a date range, the aggregate of all alerts that focus on a particular user |
| 28 | GetTotalTagsUsedInSystem | Gets the total number of tags created for each date |
| 29 | GetAllEntriesSummary | Retrieves an asset's rating, view count, and downloaded count between two dates |

| SERVICE | PeopleService | |
|---|---|---|
| SL No | Web Methods | Description |
| 1 | SearchPeople | Performs a "people search" against the business organization's people webservice. Returns detailed information about a person |

| SERVICE | RatingService | |
|---|---|---|
| SL No | Web Methods | Description |
| 1 | SetRating | Sets a rating for an entry |
| 2 | GetRatingOfUser | Returns the rating a user gave for an entry |
| 3 | GetAverageRatingOfEntry | Retrieves the average rating for an entry |
| 4 | GetAllEntriesAboveRating | Returns entries above a the specified rating |
| 5 | RemoveRating | Removes a rating from an entry |
| 6 | GetTopRatedEntries | Retrieves the top 'n' entries by their rating |

| SERVICE | ReviewService | |
|---|---|---|
| SL No | Web Methods | Description |
| 1 | CreateReview | Creates a review for entry with a rating |
| 2 | DeleteReview | Deletes a review from an entry |
| 3 | UpdateReview | Allows a user or admin to update a review |
| 4 | GetReview | Gets all reviews for a user |
| 5 | GetAllReviewsForEntry | Retrieves all the reviews associated with an entry |

| SERVICE | SearchService | |
|---|---|---|
| SL No | Web Methods | Description |
| 1 | Search | Searches Marketing Asset Exchange and company enterprise database and returns items based on the terms and metadata (Marketing Asset Exchange records only).Returns 3 separate collections( Marketing Asset Exchange, Company Enterprise Database, Preferred Sources) only if matching criteria. |
| 2 | SearchArchive | Searches expired Marketing Asset Exchange and Company Enterprise Database and returns items based on the terms and metadata (Marketing Asset Exchange records only). Only Marketing Asset Exchange records are expired. Company Enterprise Database and preferred sources never expire. |
| 3 | SearchByPaging | Returns specific page of search results. |
| 4 | SearchSavedSearch | Executes a saved search based on the saved search name |
| 5 | GetApprovedRepositoryList | Retrieves a collection of URLs and descriptions from the URL repository table (preferred sources) |
| 6 | SetRepositoryList | Sets the list of repository URLS for preferred sources |
| 7 | CreateSavedSearch | Creates a saved search that will be executed every time the user logs in |
| 8 | GetSavedSearchNames | Retrieves a list of unique saved search names with IDs |
| 9 | DeleteSavedSearch | Deletes a saved search and any subscription records |
| 10 | GetSavedSearch | Retrieves a saved search based on the saved search name. |
| 11 | ExecuteUserSavedSearch | Retrieves a collection of saved searches ready for execution and executes the search. Also creates an alert based on the search, enterprise ID, type, term, condition and name of the saved search. |
| 12 | ExportSearchResults | Returns search results to be exported to Excel depending on the entryID/ RecordID and uniqueKey passed |

| SERVICE | UserService | |
|---|---|---|
| SL No | Web Methods | Description |
| 1 | GetAllRoles | Gets all roles defined in the system |
| 2 | SetUserRole | Updates a user's role |
| 3 | SetUserFollowable | Sets a user a followable |
| 4 | GetFollowableUsers | Retrieves a list of followable users |
| 5 | GetAllSavedSearch | Retrieves a list of saved searches for specified enterprise ID |
| 6 | CreateUser | Creates a new user in the system |
| 7 | CheckUserAccess | This is the Login method. Pass in an enterprise ID to check if a user has access to the system. If the account does not exist in the database, a new account with user access will be created. |
| 8 | GetRecentlyViewedEntries | Retrieves the last 10 entries a user viewed |

The logic, circuitry, and processing described above may be encoded or stored in a machine-readable or computer-readable medium such as a compact disc read only memory (CDROM), magnetic or optical disk, flash memory, random access memory (RAM) or read only memory (ROM), erasable programmable read only memory (EPROM) or other machine-readable medium as, for examples, instructions for execution by a processor, controller, or other processing device.

The medium may be implemented as any device that contains, stores, communicates, propagates, or transports executable instructions for use by or in connection with an instruction executable system, apparatus, or device. Alternatively or additionally, the logic may be implemented as analog or digital logic using hardware, such as one or more integrated circuits, or one or more processors executing instructions; or in software in an application programming interface (API) or in a Dynamic Link Library (DLL), functions available in a shared memory or defined as local or remote procedure calls; or as a combination of hardware and software.

In other implementations, the logic may be represented in a signal or a propagated-signal medium. For example, the instructions that implement the logic of any given program may take the form of an electronic, magnetic, optical, electromagnetic, infrared, or other type of signal. The systems described above may receive such a signal at a communication interface, such as an optical fiber interface, antenna, or other analog or digital signal interface, recover the instructions from the signal, store them in a machine-readable memory, and/or execute them with a processor.

The systems may include additional or different logic and may be implemented in many different ways. A processor may be implemented as a controller, microprocessor, microcontroller, application specific integrated circuit (ASIC), discrete logic, or a combination of other types of circuits or logic. Similarly, memories may be DRAM, SRAM, Flash, or other types of memory. Parameters (e.g., conditions and thresholds) and other data structures may be separately stored and managed, may be incorporated into a single memory or database, or may be logically and physically organized in many different ways. Programs and instructions may be parts of a single program, separate programs, or distributed across several memories and processors.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A system for marketing asset searching, comprising:
a computer system having a processor and memory;
a network operatively coupled to external databases accessible through external searching tools, the external databases containing assets, wherein the assets are categorized as marketing assets and as market-ready assets, the market-ready assets are qualified for publication outside a business organization that controls or develops the assets, and the marketing assets are not qualified for publication outside a business organization that controls or develops the assets;
a user interface configured to facilitate asset searching among the external databases;
the user interface comprising:
a keyword inquiry module configured to receive a search criteria from a user;
a filter module configured to provide a filtering option selectable by the user;
a search request module configured to provide a search request constructed from the search criteria to the external searching tools, and configured to initiate searching of the external databases, said searching limited according to the filtering option selected; and
a display output module configured to receive results of the search request and present the results on a display.

2. The system of claim 1, wherein the assets are selected from the group consisting of documents, audio files, podcasts, video files, flash files, images, print and electronic documents, Websites, and Web pages.

3. The system of claim 1 or 2, wherein the search request module is configured to provide the search criteria to a front-end of the external searching tools, and the external searching tools are operable to return search results based on a search of the external databases.

4. The system of any one of the preceding claims, wherein the display output module is configured to provide the results of the search request including a link to located assets found among the assets in the external databases.

5. The system of any one of the preceding claims, wherein the display output module is configured to provide the results of the search request on a first area of the display and to indicate a count of located assets found among the assets in the external databases, including a link to each of the located assets, and to display an indication of whether each located asset is a marketing asset or a market-ready asset.

6. The system of claim 5, wherein the display output module is operable to determine whether to identify each located asset as a market-ready asset based on an identification of a predetermined database from among the external databases in which the market-ready asset was found.

7. The system of any one of the preceding claims, further including an asset tracking module that operable to track usage, viewing, and access of the assets by users.

8. The system of any one of the preceding claims, further including a user tracking module that operable to track a predetermined user's usage, viewing, and access of the assets.

9. A computer-implemented method for marketing asset searching, comprising:
providing a computer system having a processor and memory;
providing access to external databases accessible through external searching tools, the external databases containing assets, wherein the assets are categorized as marketing assets and as market-ready assets, the market-ready assets are qualified for publication outside a business organization that controls or develops the assets, and the marketing assets are not qualified for publication outside a business organization that controls or develops the assets;
facilitating an asset search among the external databases;
receiving a search criteria from a user;
providing the user with a user-selectable filtering option;
providing a search request constructed from the search criteria, to the external searching tools to initiate searching of the external databases, said searching of the external databases limited in accordance with the filtering option selected by the user; and
receiving results of the search request and presenting the results on a display.

10. The computer-implemented method of claim 9, wherein the assets are selected from the group consisting of documents, audio files, podcasts, video files, flash files, images, print and electronic documents, Websites, and Web pages.

11. The computer-implemented method of claim 9 or 10, wherein the asset search includes a search criteria, and an external searching tools return search results based on a search of the external databases.

12. The computer-implemented method of any one of claims 9 to 11, wherein the display output module provides the results of the search including a link to the assets found.

13. The computer-implemented method of any one of claims 9 to 12, wherein the presentation of the results on the display includes results of the searching on a first area of the display and indicates a count of located assets found, including a link to each of the located assets, and includes an indication of whether each located asset is a marketing asset or a market-ready asset.

14. The computer-implemented method of any one of claims 9 to 13, wherein an asset is identified as a market-ready asset based on an identification of a predetermined database from among the external databases in which the market-ready asset was found.

15. Computer program product comprising computer readable instructions, which when loaded and run in a computer and/or computer network system, causes the computer system and/or the computer network system to perform operations according to a method of any one of claims 9 to 14.
